Europäisches Patentamt

European Patent Office

Office européen des brevets

(19)

(11) EP 0 715 253 B1

(12) EUROPEAN PATENT SPECIFICATION

(45) Date of publication and mention
of the grant of the patent:
**28.04.1999 Bulletin 1999/17**

(51) Int Cl.$^6$: **G06F 9/44**, G06F 7/00

(21) Application number: **95120411.4**

(22) Date of filing: **13.12.1989**

(54) **Fuzzy control system and method**

Fuzzy-Steuersystem und Verfahren

Système et méthode de commande à logique floue

(84) Designated Contracting States:
**DE FR GB IT**

(30) Priority: **14.12.1988 JP 315360/88**
**07.02.1989 JP 28373/89**

(43) Date of publication of application:
**05.06.1996 Bulletin 1996/23**

(62) Document number(s) of the earlier application(s) in
accordance with Art. 76 EPC:
**89123056.7 / 0 373 628**

(73) Proprietor: **OMRON CORPORATION**
**Kyoto 616-8025 (JP)**

(72) Inventors:
• **Tsutsumi, Yasuhiro, c/o Omron Corp.**
**Nagaokakyo-shi, Kyoto 617 (JP)**
• **Ohtsubo, Yutaka, c/o Omron Corp.**
**Nagaokakyo-shi, Kyoto 617 (JP)**

(74) Representative: **WILHELMS, KILIAN & PARTNER**
**Patentanwälte**
**Eduard-Schmid-Strasse 2**
**81541 München (DE)**

(56) References cited:
**US-A- 4 837 725**

• **GUPTA AND YAMAKAWA: "Fuzzy Computing"**
**1988 , ELSEVIER SCIENCE PUBLISHERS ,**
**NORTH-HOLLAND XP002047939 "Intrinsic**
**Fuzzy Electronic Circuits For Sixth Generation**
**Computer" * page 157 - page 171 ***
• **EFSTATHIOU J: "EXPERT SYSTEMS, FUZZY**
**LOGIC AND RULE-BASED CONTROL**
**EXPLAINED AT LAST" TRANSACTIONS OF THE**
**INSTITUTE OF MEASUREMENT AND CONTROL,**
**vol. 10, no. 4, 1 July 1988, pages 198-206,**
**XP000080413**

**Description**

BACKGROUND OF THE INVENTION

Field of the Invention

The present invention relates to a fuzzy control system development support apparatus and to a method of supporting development of a fuzzy control system.

Description of the Related Art

In accordance with the fuzzy theory, it is possible to represent senses of human beings by utilizing membership functions as means to numerically express such senses.

The human senses characteristically change depending on situations and environments of the human being. For example, let us consider a temperature of water in a Japanese bath. Since the senses vary between the seasons of the year, the judgement of an appropriate temperature suitable for the bath changes depending on each season. In general, when the outdoor or environmental temperature is higher, a slightly warmer temperature of the water is likely to be desired. Namely, the suitable temperature is assumed such that a silghtly lower temperature and a slightly higher temperature are appropriate in summer and winter, respectively.

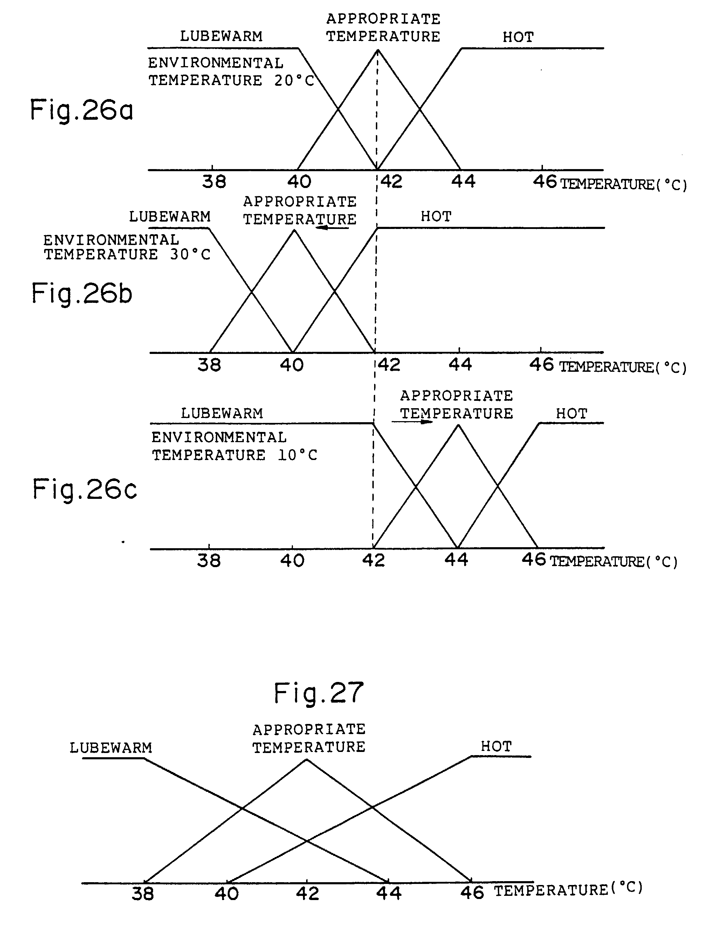

As describe above, owing to the difference in the sense with respect to the temperature of water, as shown in the graphs of FIGS. 26a to 26c, membership functions representing the appropriate temperatures of water develop different contours in association with environmental temperatures.

The graph of FIG. 26a shows a membership function developed when the environmental temperature is 20 °C in which when the temperature rises to 30°C, the graph shifts toward the direction of the lower temperature as shown in FIG. 26b, whereas when the temperature lowers to 10°C, the graph is displaced toward the direction of the higher temperature as shown in FIG. 26c.

The membership functions $\mu^{20}_A(t)$, $\mu^{20}_B(t)$, and $\mu^{20}_C(t)$ representing the senses of "lukewarm", "appropriate temperature", and "hot" at the environmental temperature 20°C are expressed as follows.

$$\mu^{20}_A(t) = [1 \wedge -1/2(t-42)] \vee 0 \tag{1}$$

$$\mu^{20}_B(t) = [1/2(t-40) \wedge -1/2(t-44)] \vee 0 \tag{2}$$

$$\mu^{20}_C(t) = [1/2(t-42) \wedge 1] \vee 0 \tag{3}$$

In these expressions (1) to (3), $\wedge$ and $\vee$ denote MIN and MAX operations, respectively.

Similarly, the membership functions at the environmental temperatures 30 °C and 10 °C are respectively represented by the following expressions (4) to (6) and (7) to (9).

$$\mu^{30}_A(t) = [1 \wedge -1/2(t-40)] \vee 0 \tag{4}$$

$$\mu^{30}_B(t) = [1/2(t-38) \wedge -1/2(t-42)] \vee 0 \tag{5}$$

$$\mu^{30}_C(t) = [1/2(t-40) \wedge 1] \vee 0 \tag{6}$$

$$\mu^{10}_A(t) = [1 \wedge -1/2(t-44)] \vee 0 \tag{7}$$

$$\mu^{10}_B(t) = [1/2(t-42) \wedge -1/2(t-46)] \vee 0 \tag{8}$$

$$\mu^{10}{}_C(t) = [1/2(t-44) \wedge 1] \vee 0 \tag{9}$$

In the conventional fuzzy system, a plurality of membership functions are required to be defined for the respective environmental temperatures in advance. If it is desired to establish correspondences with respect to all possible environmental temperatures, an infinite number of membership functions are required to be defined.

In order to cope with the variation in the sense above, there has been proposed a method in which the environmental temperature is assumed to be an element or a factor (an external disturbance) increasing ambiguity of the sense so as to adopt a membership function (as shown in FIG. 27) obtained through a composition utilizing a plurality of membership functions.

The graph of FIG. 27 shows membership functions developed when the environmental temperature deviates in a range from 10 °C to 30°C centered on 20 °C. The membership function representing the appropritate temperature extends in the water temperature range from 38°C to 46°C. When the width of the range is narrower, the ambiguity of the membership function expressing the suitable temperature is decreased. However, in the method associated with this graph, the membership function possesses an enlarged width, namely, an increased ambiguity, which leads to a problem that an appropriate inference cannot be easily accomplished.

Incidentally, in general, according to a fuzzy control, when an input signal is supplied, for example, form a sensor to a fuzzy inference apparatus, a group of fuzzy inference rules are used to achieve an inference operation such that based on a result of the inference operation of each inference rule, the apparatus decides a control operation of a control object. The fuzzy inference apparatus includes a fuzzy inference antecedent processing section and a fuzzzy inference consequent processing section, so that the inference outputs of the resepctive inference rules are fed from the consequent section to a concluding or composing section, which achieves a composition by use of the inference outputs. For example, an output of a definite or determinant value is generated so as to be delivered to the control object.

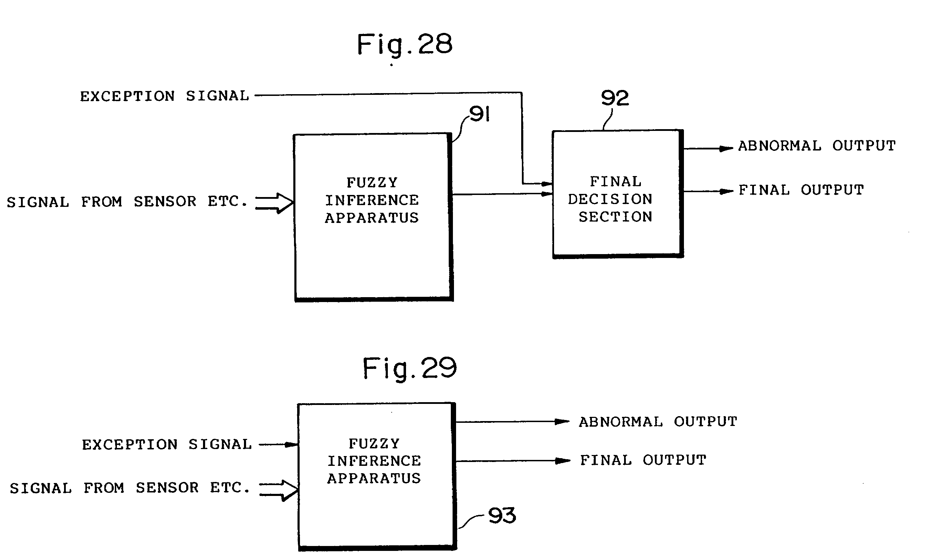

In the control system of this kind, there may occur a case where an abnormality signal is received from a sensor or the like or where a decrease in a signal level lowers the reliability of the input signal from the sensor. In such a situation, it is not appropriate to directly supply the control object with the determinant value output as the final output from the fuzzy inference apparatus. Consequenty, as shown in FIG. 28, a final decision section 92 is disposed on the output side of a fuzzy inference apparatus 91 so as to determine presence or absence of an exception signal such as an abnormality signal such that depending on the result of determination, the determinant output from the fuzzy inference apparatus 91 is delivered as the final output or an abnormality output is produced.

However, in such a method, there is required the final decision section 92, which necessitates excessive circuit configurations and devices and hence soars the cost of the apparatus.

In order to cope with the problem above, there has been employed a fuzzy inference apparatus 93 (shown in FIG 29) in which the inference rules include propositions or statements related to exception signals. In this method, however, the exception signals are required to be incorporated as propositions of the inference rules, which leads to a problem that the inference rules becomes to be complicated.

Furthermore, certainty of each inference rule can be determined by use of the membership function in the fuzzy inference antecedent and consequent processing sections. However, in a case where such certainty is desired to be altered, it is necessary to set a membership function for each inference rule, namely, the corresponding operation is troublesome.

When a fuzzy control system is to be configured for a control system, it is necessary to produce an application system including fuzzy inference rules and membership functions most suitable for the control system. In a case of development of an application system to conduct the fuzzy control by use of a microprocessor and a storage, data items of fuzzy inference rules and membership functions as well as fuzzy inference programs have been conventionally developed for each application.

However, because of necessities of development of the data items of fuzzy inference rules and membership functions and fuzzy inference programs for each application, the development efficiency is considerably lowered. Moreover, an evaluation of the fuzzy inference rules and the membership functions of the application thus developed cannot be accomplished without connecting the system to the actual control system. In consequence, the system development requires a very long period of time.

Document EFSTATHIOU J: "EXPERT SYSTEMS, FUZZY LOGIC AND RULE-BASED CONTROL EXPLAINED AT LAST", TRANSACTIONS OF THE INSTITUTE OF MEASUREMENT AND CONTROL, vol. 10, no.4, 1 July 1988, pages 198-206 describes the problem of knowledge acquisition, in the context of control, and the role of fuzzy logic, as a means of expressing necessarily imprecise knowledge and coping with the problems of an incomplete knowledge-base. A self-organising controller is introduced as an enhancement of rule-based control.

## SUMMARY OF THE INVENTION

It is therefore an object of the present invention is to provide a support apparatus which considerably improves the development efficiency of a fuzzy control system, thereby solving the difficulties mentioned above.

A fuzzy control system development support apparatus and method for supporting development of a fuzzy control system according to the present invention is set out in claims 1 and 10 respectively.

In the apparatus above, the simulation section includes a simple control simulation section which supplies a single pseudo input or consecutive pseudo inputs to the knowledge base to achieve a fuzzy inference so as to produce an inference result.

Furthermore, the simulation section of the apparatus mentioned above is characterized by comprising a control system simulation section for accomplishing a simulation in a closed loop control system including a control objective model established with arbitrary parameters and the fuzzy inference section so as to generate a simulation result.

In the apparatus above mentioned, it is favorable to include means for continuously outputting simulation results as fuzzy rule adaptive degrees.

Moreover, the fuzzy control system development support apparatus according to the present invention is characterized by comprising a knowledge base for storing therein fuzzy processing rules and membership functions edited on a display screen, and a translator for translating contents of the knowledge base into any language.

Since an embodiment of the support apparatus in accordance with the present invention includes a knowledge base and a simulation section so as to set the contents of the knowledge base on a display screen, the inference simulation can be easily carried out and the alteration of the knowledge base is also considerably simplified. With the provision of the support apparatus configured as described above, there is completely removed the difficulty of the prior art technology that the evaluation of the fuzzy processing rules and the membership functions cannot be accomplished without connecting the application system to the actual machine. Namely, the evalution thereof can be conducted at a development stage by use of the support apparatus. Consequently, there is attained an advantage that a desired application can be developed in a very short period of time.

Furthermore, in accordance with an embodiment of the support apparatus of the present invention, since an inference result can be produced for consecutive pseudo input so as to be stored in a memory, it is possible to employ the memory directly in an actual fuzzy controller. This provision leads to an advantage that the inference program development is unnecessitated.

Moreover, according to an embodiment of the support apparatus of the present invention, in a support apparatus, a closed loop control system is constituted with a control objective model and a fuzzy inference section so as to achieve a simulation and the control objective model and the knowledge base of the fuzzy inference section can be easily edited on the display screen, the simulation is considerably facilitated and hence the support capability for the development is highly enhanced.

In addition, according to an embodiment of the support apparatus of the present invention, there is disposed a translator for translating the contents of the knowledge base into an arbitrary language such as the C language; consequently, the fuzzy system is quite advantageous for the development of application programs conforming to various kinds of microprocessors.

Furthermore, in accordance with an embodiment of the support apparatus of the present invention, since the simulation results can be displayed as fuzzy rule adaptive degrees, the evaluation of the fuzzy processing rules are advantageously simplified to a considerable extent.

## BRIEF DESCRIPTION OF THE DRAWINGS

These and other objects and advantages of the present invention will become apparent by reference to the following description and accompanying drawings wherein:

FIG. 1 is a schematic block diagram showing a configuration example of a fuzzy inference section to which the fuzzy control system development support apparatus of the present invention is applied;

FIG. 2 is a block diagram schematically showing the configuration of a membership function unit associated with a first embodiment according to the fuzzy control system development support apparatus of the present invention;

FIG. 3 is a block diagram showing a second embodiment of the membership function setting section;

FIG. 4 is a graph showing a state in which the shape of the membership function changes;

FIG. 5 is a graph showing a state in which the gradient of the membership function varies;

FIGS. 6a and 6b are explanatory diagrams for explaining membership functions employed in an inference process of the second embodiment;

FIG. 7 is a block diagram showing a fuzzy inference apparatus associated with a third embodiment in accordance with the fuzzy control system development support apparatus of the present invention;

FIG. 8 is a functional block diagram showing a fuzzy inference operation unit;
FIG. 9 is an explanatory diagram useful to explain an example of contents stored in a coefficient memory;
FIG. 10 is a flowchart showing a procedure of an inference operation in a fuzzy inference operation section;
FIG. 11 is a flowchart showing a procedure of a related rule processing;
FIG. 12 is a functional block diagram showing the configuration of a fourth embodiment according to the fuzzy control system development support apparatus of the present invention;
FIG. 13 is a functional block diagram showing a software constitution of a fuzzy control system development support apparatus of the fourth embodiment according to the present invention;
FIGS. 14 to 16 are diagrams schematically showing examples of display screens when a fuzzy processing rule and a membership function are edited;
FIG. 17 is a schematic diagram showing formulae representing a plant model;
FIGS. 18a to 18c are diagrams schematically showing flows of computations in a plant computing section;
FIG. 19 is a schematic diagram showing the configuration of a closed loop system associated with a control system simulation;
FIGS. 20 to 22 are diagrams schematically showing display examples of control system simulation results;
FIGS. 23 and 24 are diagrams respectively showing screens in which a control objective model and a control simulation environmental condition are set;
FIG. 25 is a flowchart of an operation to store in a target memory an output result from a support apparatus according to the fuzzy control system development support apparatus of the present invention;
FIGS. 26a to 29 are diagrams schematically showing the related art;
FIGS. 26a to 26c are graphs showing states in which the shapes of membership functions alter depending on outdoor or environmental temperatures;
FIG. 27 is an explanatory diagram useful to explain an example of a membership function used in a fuzzy inference process; and
FIGS. 28 and 29 are block diagrams showing fuzzy inference apparatuses.

DESCRIPTION OF THE PREFERRED EMBODIMENTS

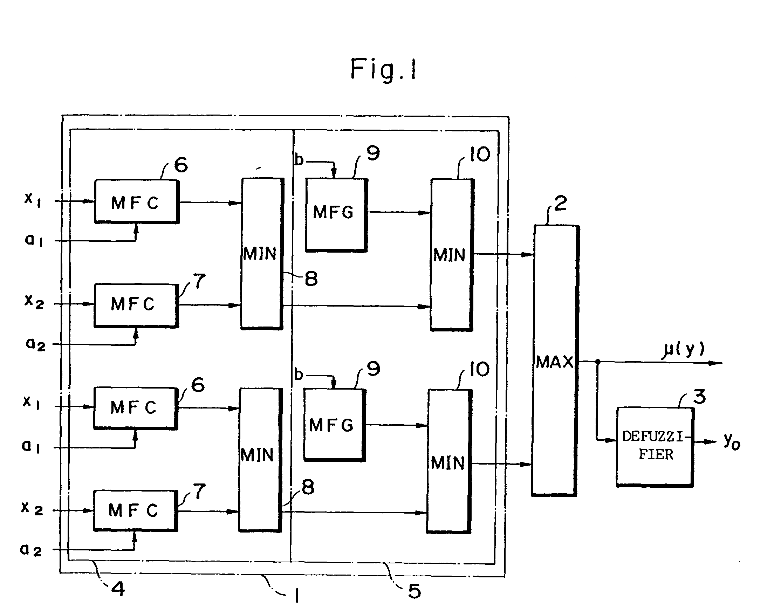

FIG. 1 is a diagram showing an example of the constitution of a fuzzy inference apparatus to which the fuzzy control system development support apparatus of the present invention is applied.

The fuzzy inference apparatus is disposed, for example, to automatically control the temperature of water in a bath. However, the fuzzy control system development support apparatus of the present invention is not restricted by this example, namely, is also naturally applicable to fuzzy inference systems associated with other purposes.

In this illustrative example, the fuzzy inference apparatus comprises a rule processing section 1, an MAX composing circuit 2, and a defuzzifier 3. The rule processing section 1 is supplied with two kinds of inputs $x_1$ and $x_2$ obtained by conducting sample and hold operations on signals from sensors or the like. By the way, the number of inputs is not necessarily limited to two, namely, the number may be one or may be three or more.

The rule processing section 1 includes an antecedent processing section 4 and a consequent processing section 5 for executing a fuzzy inference in conformity with a plurality of fuzzy processing rules. The antecedent processing section 4 comprises for each rule two membership function circuits (MFC) 6 and 7 and an MIN circuit 8. The consequent processing section 5 comprises for each rule a membership function generator (MFG) 9 and an MIN circuit 10.

The fuzzy processing rules are called "if, then" rules and are represented in this embodiment case as follows.

(Rule 1)
if $x_1 = X_{11}{}^{(a1)}$ and $X_2 = {}_{11}{}^{(a2)}$,
then $y = Y_1{}^{(b)}$
(Rule 2)
if $x_1 = X_{21}{}^{(a1)}$ and $X_2 = {}_{22}{}^{(a2)}$,
then $y = Y_2{}^{(b)}$

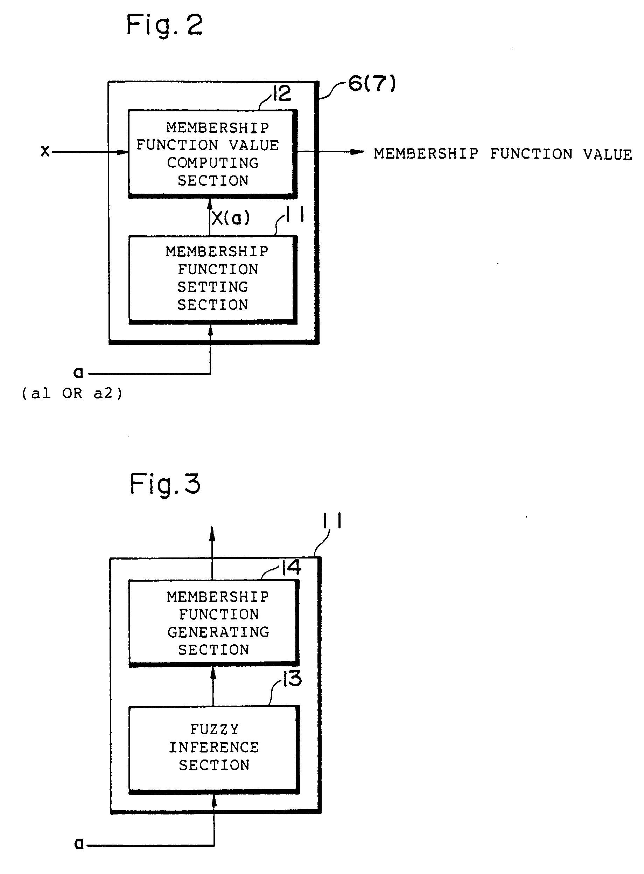

FIG. 2 shows an example (a first embodiment) of the constitution of the membership function circuit 6 or 7 in the antecedent processing section 4. This configuration includes a membership function setting section 11 and a membership function value computing section 12.

The membership function setting section 11 is adopted to adjust positions or shapes of membership functions for the setting thereof depending on elements (e.g. the environmental temperature in the example described above) influencing human senses. In this configuration, depending on elements a1 and a2, positions or shapes of membership functions are set to the first and second membership function circuits 6 and 7, respectively. The elements a1 and a2 are supplied as inputs to set membership functions from a sensor (e.g. a temperature sensor); however, these inputs may be delivered from other than sensors (for example, a keyboard, a file, or the like may be used). Furthermore, although the respective elements are represented as scalar quantities, these elements may be expressed in vector quantities.

In the constitution example above, assuming a case where the position of a membership function varies depending on an environmental temperature $\tau$, the senses of "lukewarm", "appropriate temperature", and "hot" are respectively expressed by the following membership functions.

$$\mu_A (t, \tau) = [1 \wedge -1/2(t-42-f_1 (\tau)] V 0 \tag{10}$$

$$\mu_B (t, \tau) = [1/2(t-40-f_{21}(\tau)) \wedge$$

$$-1/2(t-44-f_{22}(\tau))] V 0 \tag{11}$$

$$\mu_C (t, \tau) = [1/2(t-42-f_3(\tau)) \wedge I] V 0 \tag{12}$$

The function f above represents variations in the positions of the membership functions depending on a change in the environmental temperature $\tau$. Assuming here $f_1 (\tau) = f_{21} (\tau) = f_{22} (\tau) = f_3 (\tau) = 1/5(\tau - 20)$, the expression (11) above is identical to the expressions (2), (5), and (8).

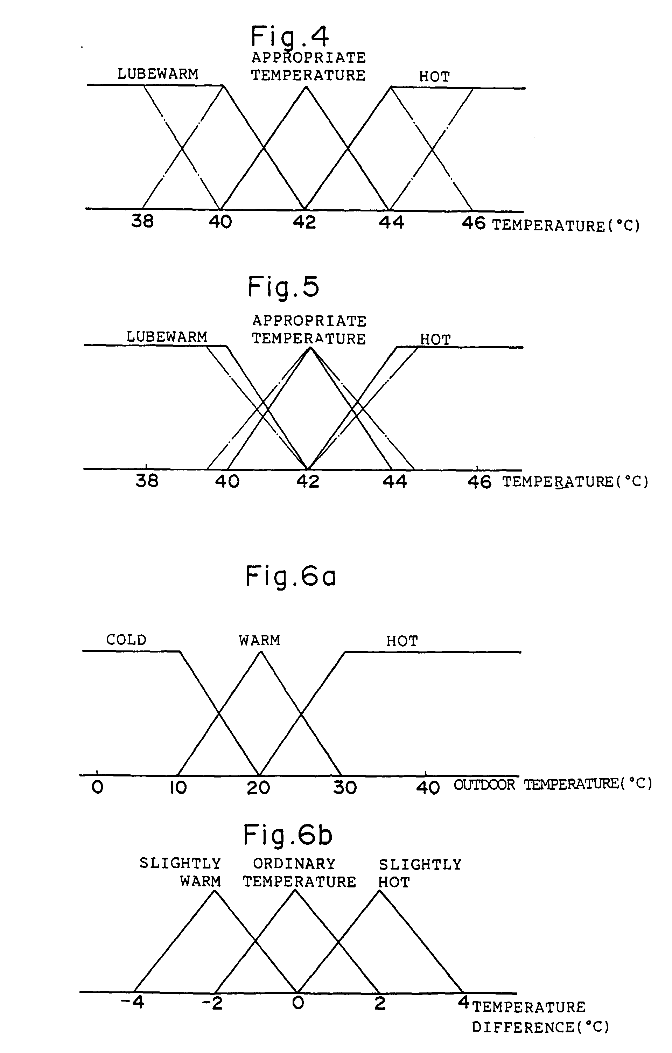

FIG. 4 shows the membership functions thus obtained in which broken lines indicate a state of change in the position of the membership functions.

Furthermore, assuming a case where the shape (gradient) of a membership function alters depending on the environmental temperature $\tau$, the membership functions above are expressed as follows.

$$\mu_A (t, \tau) = [1 \wedge -g_1 (\tau) (t - f_1 (\tau))] V 0 \tag{13}$$

$$\mu_B (t, \tau) = [g_{21} (\tau)(t - f_{21}(\tau)] \wedge$$

$$-g_{22} (\tau)(t-f_{22}(\tau)) V 0 \tag{14}$$

$$\mu_C (t, \tau) = [g_3 (\tau) (t-f_3(\tau)) \wedge 1] V 0 \tag{15}$$

In these expression, assuming $g_1 (\tau)) = g_{21}(\tau) = g_{22} (\tau) = g_3 (\tau)$, $f_1 (\tau) = f_3 (\tau) = 42 + 1/5 (\tau -20)$, and $f_{21} (\tau) = 40 + 1/5(\tau - 20)$; the expression (14) is identical to the expressions (2), (5), and (8).

FIG. 5 shows membership functions thus drawn in which the broken lines indicate a state of change in the gradient of the membership functions.

In the examples above, only the environmental temperature $\tau$ is assumed as the element or factor to influence the human senses. however, assuming two kinds of elements (e.g. an environmental temperature $\tau$ and an environmental humidity $\sigma$) in this case, the membership functions are expressed as follows.

$$\mu_A [t,(\tau, \sigma)] = \{1 \wedge -g_1(\tau, \sigma) [t - f_1 (\tau, \sigma)]\} V 0 \tag{16}$$

$$\mu_B [t, (\tau, \sigma)] = \{g_{21} (\tau, \sigma) [t - f_{21} (\tau, \sigma)]\} \wedge$$

$$-g_{22} (\tau, \sigma)[t-f_{22} (\tau, \sigma)] V 0 \tag{17}$$

$$\mu_C [t,(\tau, \sigma)] = \{ g_3 (\tau, \sigma) [t-f_3 (\tau, \sigma)] \wedge 1\} V 0 \tag{15}$$

FIG. 3 shows a second embodiment according to an embodiment of the fuzzy control system development support apparatus of the present invention in which the membership function setting section 11 includes a fuzzy inference section 13 and a membership function generating section 14.

Influences of the variations in the environmental temperature $\tau$ and humidity a on the positions and gradient values of the memberships are represented by use of the functions f and g. However, when the elements influencing the human senses are complicatedly linked with each other, it is difficult to attain parameters expressed by such functions f and g. In order to overcome this difficulty, according to the second embodiment, the fuzzy inference section 13 conducts a fuzzy inference to obtain the parameters above so as to generate the membership functions by use of the parameters in the membership function generating section 14.

Fuzzy processing rules in the fuzzy inference section 13 are represented as follows in a case where, for example, only the environmental temperature is set as the factor influencing the human senses.

(Rule 1)

If the environmental temperature indicates a hot condition, the human sense is likely to desire a slightly warm water.

(Rule 2)

If the environmental temperature indicates a warm condition, the human sense is likely to desire water at a usual or ordinary temperature.

(Rule 3)

If the environmental temperature indicates a hot condition, the human sense is likely to desire a slightly hot water.

FIGS. 6a and 6b specifically show the membership functions under the conditions above.

The membership functions thus determined are fed to the membership function value computing sections 12 of the membership function circuits 6 and 7. On receiving an input x, the membership function value computing section 12 conducts an operation to attain an adaptive degree indicating a degree of adaptability of the input x onto the membership function so as to compute a membership function value.

Returning to FIG. 1, in the antecedent processing section 4 of the rule processing section 1, when the membership function circuits 6 and 7 respectively compute, for each rule, membership function values (adaptive degrees) by use of membership functions respectively adjusted depending on the elements al and a2, the respective MIN circuits 8 select smaller ones of the computed values. In the MIN circuit 10 of the consequent processing sections based on the selected adaptive degree, there is imposed a restriction on the membership function related to an output y of the fuzzy rule and fed by the membership function generator 9, thereby attaining, for example, a membership function of a trapezoidal shape.

The membership function associated with the output y to be supplied to each MIN circuit 10 is, like in the foregoing case, beforehand adjusted in its position or shape depending on the element b influencing the human sense in the membership function generator 9.

The MAX composing circuit 2 superimposes the outputs from the MIN circuits 10 to create a composition output $\mu$ (y). The defuzzifier 3 computes the center of gravity of the composition output so as to attain a definite or determinant output $y_o$.

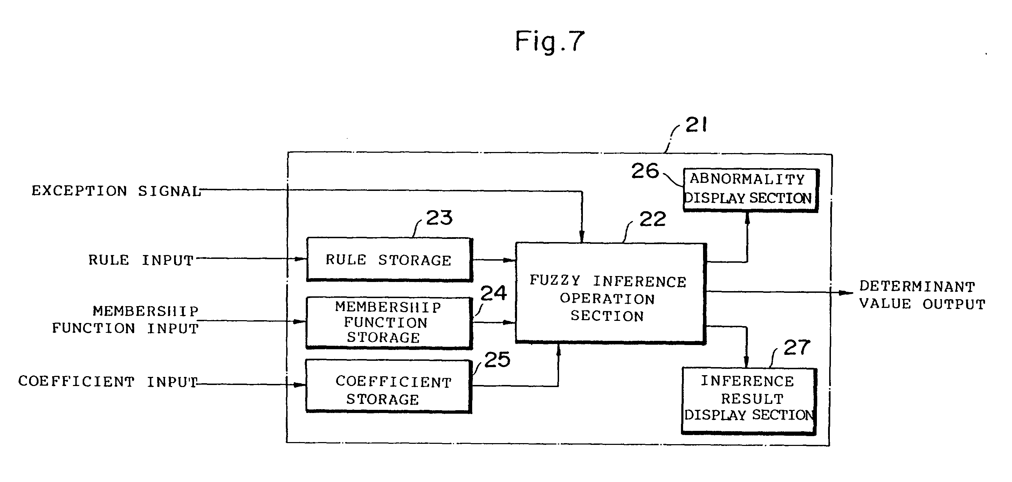

FIG. 7 shows the configuration of a fuzzy inference apparatus 21 associated with a third embodiment of the fuzzy control system development apparatus of the present invention. This configuration includes, centered on a fuzzy inference operation section 22, a rule storage 23, a membership function storage 24, a coefficient storage 25, an abnormality display section 26, and an inference result display section 27.

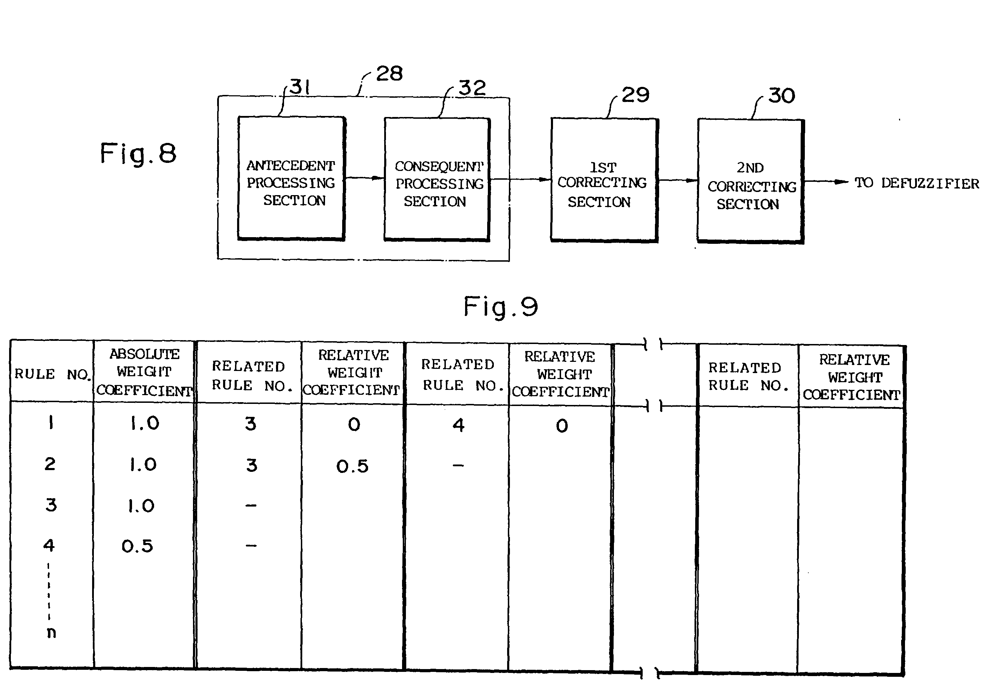

The fuzzy inference operation section 22 comprises as shown in the functional block diagram of FIG. 8 a rule processing section 28 and first and second correction sections 29 and 30. Correction outputs from the second correction sections are processed to generate a composition output to be supplied to a defuzzifier, not shown, which computes a center of gravity of the composition output, thereby delivering a determinant value output to a control object.

The rule processing section 28 is a portion in which a fuzzy inference is achieved in conformity with a plurality of inference processing rules by use of the antecedent processing section 31 and the consequent processing section 32. The antecedent processing section 31 is supplied with an input signal from a sensor or the like.

The inference rules are called "if,then" rules and are expressed in this case of the embodiment as follows.

(Rule 1)

If an abnormality signal is received from a sensor A, an abnormality output is produced.

(Rule 2)

If a signal level of a sensor B is lowered, a degree of abnormality of the sensor B is slightly great.

(Rule 3)

If the signal level of the sensor A is large and that of the sensor B is small, the signal level of an output signal F is slightly increased.

(Rule 4)

If the signal level of the sensor A is small and that of a sensor C is intermediate, the signal level of the output signal F is considerably increased.

All inference rules are stored in the rule storage 23 shown in FIG. 7, whereas the membership functions to be employed for the respective inference rules are loaded in the membership function storage 24.

The coefficient storage 25 is disposed to store therein absolute weight coefficients unique to the respective rules to be set to the associated inference rules and relative weight coefficients between the rules. FIG. 9 shows an example of contents of the storage 25.

In accordance with the values of FIG. 9, for a rule 1, the absolute weight coefficient is set as 1.0; furthermore, for rules 3 and 4 related to the rule 1, zero is set as the relative weight coefficient. In consequence, when the rule 1 is effected, the inference outputs attained by use of the rules 3 and 4 are set to zero.

For a rule 2, the absolute weight coefficient is set as 1.0, and for the rule 3 associted with the rule 2, the relative weight coefficient is set as 0.5. As a result, when the rule 2 is executed, the inference output associated with the rule 3 is multiplied by the relative coefficent 0.5 so as to accomplish a correction on the inference output.

For the rules 3 and 4, the absolute weight coefficients are respectively set as 1.0 and 0.5. This means that the certainty of the rule 3 is great and that of the rule 4 is small. In consequence, the inference output attained by use of the rule 3 is directly outputted; however, the inference output associated with the rule 4 is multiplied by the relative coefficient 0.5 for a correction of the inference output.

In the configuration of FIG. 7, the inference result display section 27 is employed to display the final inference result attained by the fuzzy inference operation section 22, whereas the abnormality display section 26 displays a message indicating an abnormality occurrence.

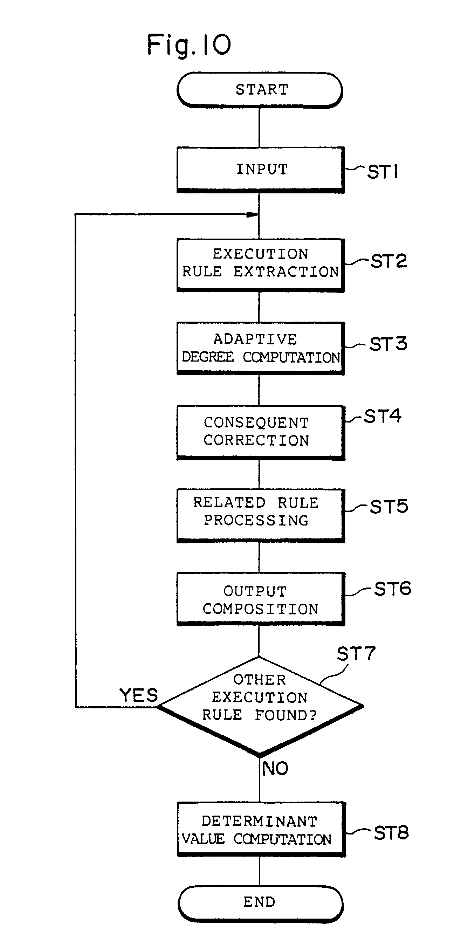

FIG. 10 shows a procedure of operations to be accomplished by the fuzzy inference operation section 22.

In this flowchart, first, when an input signal is received from a sensor in a step 1 (ST1), a step 2 extracts an inference rule to be executed such that a step 3 then effects the extracted inference processing rule by means of the antecedent processing section 31. As a result, there are computed adaptive degrees (grades or membership function values) of the respective membership functions associated with the inference rule, thereby selecting the smallest one therefrom. Next, in a step 4, based on the adaptive degree thus selected, the consequent processing section 32 imposes restriction onto a membership function related to an output of the inference rule so as to produce an inference output. In the first correction section 29, an absolute weight coefficient is multiplied by the inference output to accomplish the first correction of the output.

Assuming here that the inference rule associated with the rule 3 is executed, since the inference rule possesses a high certainty, the output is multiplied by 1.0 as the absolute weight coefficient. If the inference rule of the rule 4 is to be adopted in this execution, the inference rule has a low certatinty, 0.5 is used as the absolute weight coefficient for the correction of the inference output.

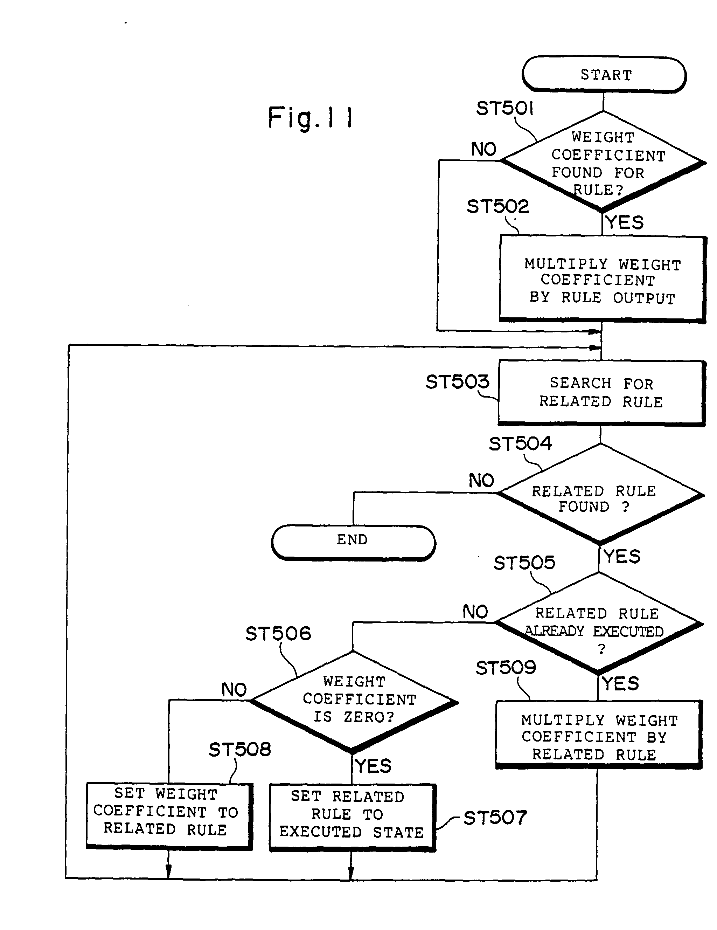

Next, in a step 5, the related rule processing of FIG. 11 is achieved, namely, in the second correction section 30, the output from the first correction section 29 is multiplied by the relative weight coefficient to conduct the second correction. The corrected inference output is subjected to a composition in an MAX composing circuit section, not shown (step 6).

When the similar procedure is completely achieved on all inference rules as described above, the judgement of a step 7 results in "YES" to proceed control to a step 8, which conducts an operation to compute a center of gravity on the corrected outputs so as to create a determinant value output.

Subsequently, a description will be given of the related rule processing shown in FIG. 11.

Assuming now that an abnormality signal is inputted from the sensor A so as to first execute the inference rule of the rule 1, a step 501 checks to determine whether or not a relative weight coefficient to be multiplied by the rule 1 is beforehand set to a predetermined buffer. Since the judgement results in "NO" in this situation, control proceeds to a step 503, which references the content of the coefficient storage 25 to determine whether or not the execution rule (rule 1) has a related rule. Since the rule 3 is found as the related rule in the coefficient storage 25, the judgement of a step 504 results in "YES" to proceed control to a step 505 to determine whether or not the related rule has already been executed. Since the rule 3 has not here been effected yet, the step 505 produces "NO" as a result of its execution. The next step 506 determines whether or not the relative weight coefficient associated with the related rule is zero. This is the case and hence the judgement of a step 506 results in "YES" to execute a step 507, which assumes that the inference rule of the rule 3 has already achieved and hence sets the inference output thereof to zero. In this manner, when an inference rule not having been executed is assumed in the processing as a rule already executed, the inference processing can be conducted at a higher speed.

Furthermore, since there also exists the rule 4 as the related rule of the execution rule 1, the processing is similarly achieved as described above. Then, after the steps subsequent to the step 503 are executed, the judgement of the step 504 finally results in "NO", thereby completing the procedure of the related rule processing.

Next, assuming a case where the signal level of the signal from the sensor B is decreased so as to first execute the inference rule associated with the rule 2, the step 501 checks to determine whether or not a relative weight coefficient to be multiplied by the rule 2 is beforehand set to a predetermined buffer. Since the judgement results in "NO" in this case, control proceeds to the step 503, which references the content of the coefficient storage 25 to determine whether or not the execution rule (rule 2) has a related rule. Since there exists the rule 3 as the related rule, the judgement of the step 504 results in "YES" to proceed control to a step 505 to determine whether or not the related rule has already been executed. Since the rule 3 has not here been effected yet, the step 505 results in "NO", and then the next step 506 determines whether or not the relative weight coefficient associated with the related rule is zero. The relative weight coefficient with respect to the rule 3 is 0.5 in this case and hence the judgement of the step 506 results in "NO" to execute a step 508, which sets the relative weight coefficient 0.5 to the predetermined buffer with respect to the rule 3. By the way, since there does not exist any other related rule of the this rule 2, the processing is returned to the step 503 such that the step 504 results in "NO", thereby completing the procedure of the related rule processing.

Moreover, assuming that the inference rule of the rule 3 is further executed, the step 501 checks to determine whether or not a relative weight coefficient to be multiplied by the rule 3 is beforehand set to a predetermined buffer. Since the judgement here results in "YES" in this case, control proceeds to a step 502, which multiplies the inference output of the rule 3 by the relative weight coefficent thus set to the buffer so as to correct the inference output. Subsequently, the step 503 references the content of the coefficient storage 25 to determine whether or not the execution rule (rule 3) has a related rule. Since there does not exist any rule as the related rule, the judgement of a step 504 results in "NO", thereby completing the procedure of the related rule processing.

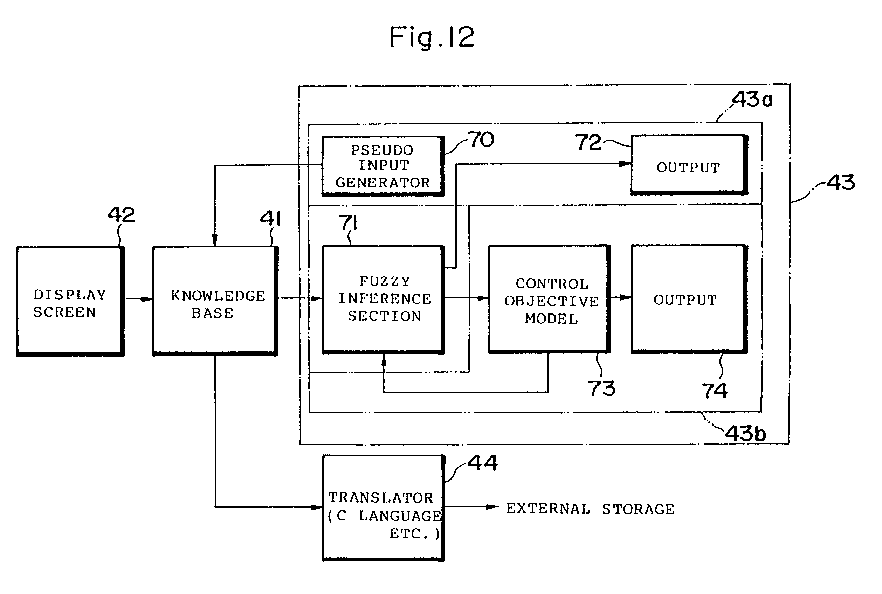

FIG. 12 shows the configuration of a fourth embodiment in accordance with the fuzzy control system development support apparatus of the present invention. A knowledge base 41 is disposed to store therein fuzzy processing rules and membership functions, which are edited on a display screen 42. In the knowledge base, the fuzzy processing rules and the membership functions are not in the execution format and hence are converted into the execution format prior to an execution of a fuzzy inference associated therewith. A simulation section 43 is employed to achieve an inference simulation by use of the fuzzy processing rules and the membership functions stored in the knowledge base 41. In accordance with the fuzzy control system development support apparatus of the present invention, the simulation section 43 comprises a simple inference simulation section 43a and a control system simulation section 43b. The simple inference simulation section 43a includes a pseudo input generator 70 for supplying a single pseudo input or consecutive pseudo inputs to the knowledge base 41. The simulation section 43 comprises as its central section a fuzzy inference section 71, which achieves a fuzzy inference on the pseudo input supplied from the pseudo input generator 70 to the knowledge base 41. For a single pseudo input or consequtive pseudo inputs, the fuzzy inference section 71 conducts a single inference or consecutive inference operations, respectively. A result of the inference is delivered as a fuzzy output and a determinant value to an output section 72, which includes a display screen and an external storage.

The control system simulation section 43b is constituted such that by use of a closed loop, a control objective model 73 established by supplying arbitrary parameters is linked with the fuzzy inference section 71, which is then connected to an output section 74. The control objective model 73 is represented with differential equations according to, for example, the Runge-Kutta method. Results of the simulation are attained by solving the differential equations of the model 73. The obtained simulation results are delivered to the output section 74 including the display screen.

Furthermore, in accordance with an embodiment of the fuzzy control system development support apparatus of the present invention, there is disposed a translator 44 for a translation into the C language and the like, namely, the fuzzy processing rules and membership functions stored in the knowledge base 41 can be translated into the C language and the like. The results of the translation are stored, for example, in an external storage.

Moreover, in accordance with an embodiment of the fuzzy control system development support apparatus of the present invention, the output section 74 for outputting the simulation results attained by the control system simulation section 43b includes means for successively outputting the simulation results as fuzzy processing rule adaptive degrees to a display screen or the like. With the provision of this means, it is possible to easily evaluate the adaptive degrees and the like of the fuzzy processing rules on the display screen or the like.

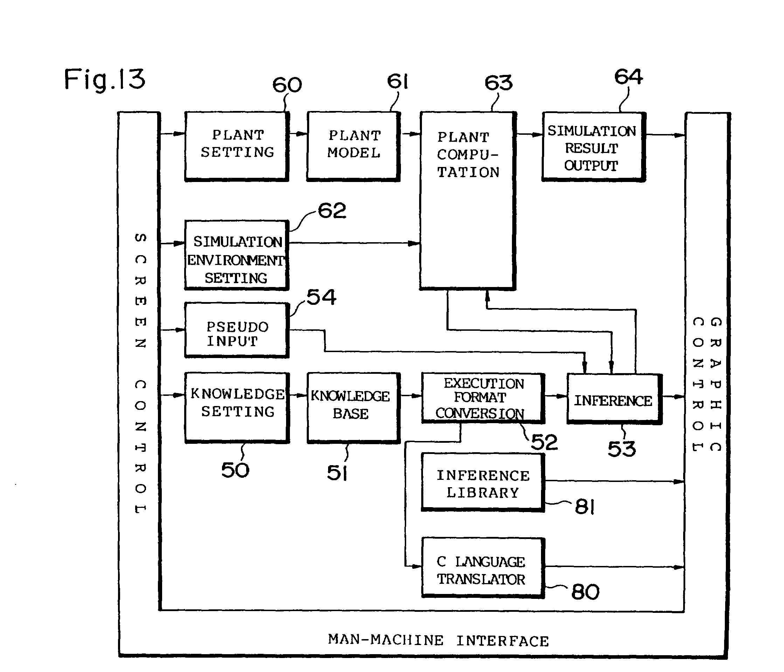

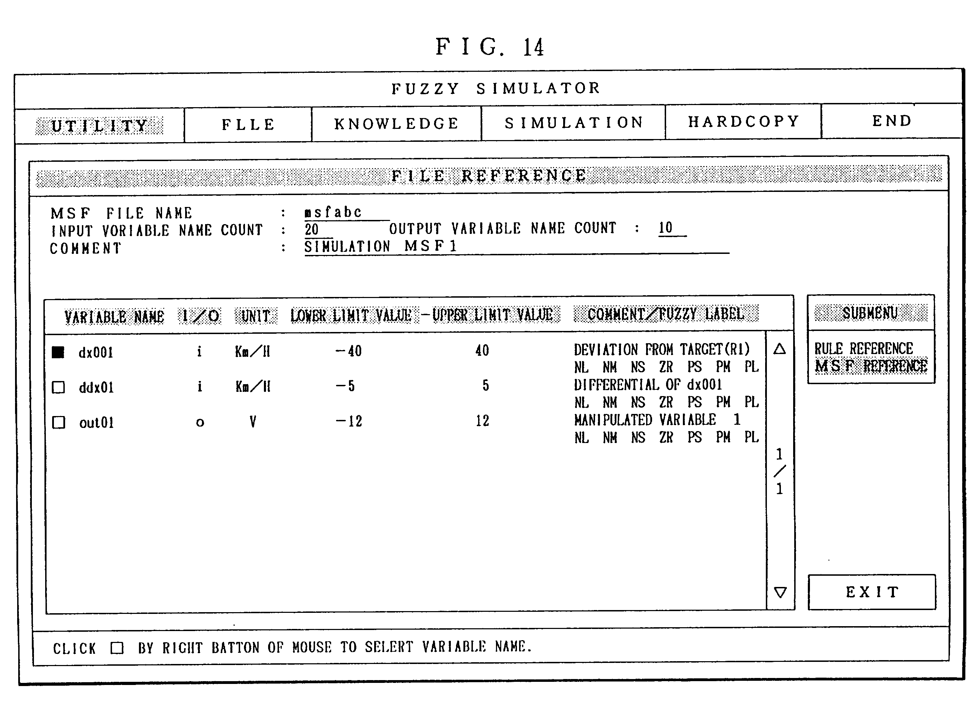

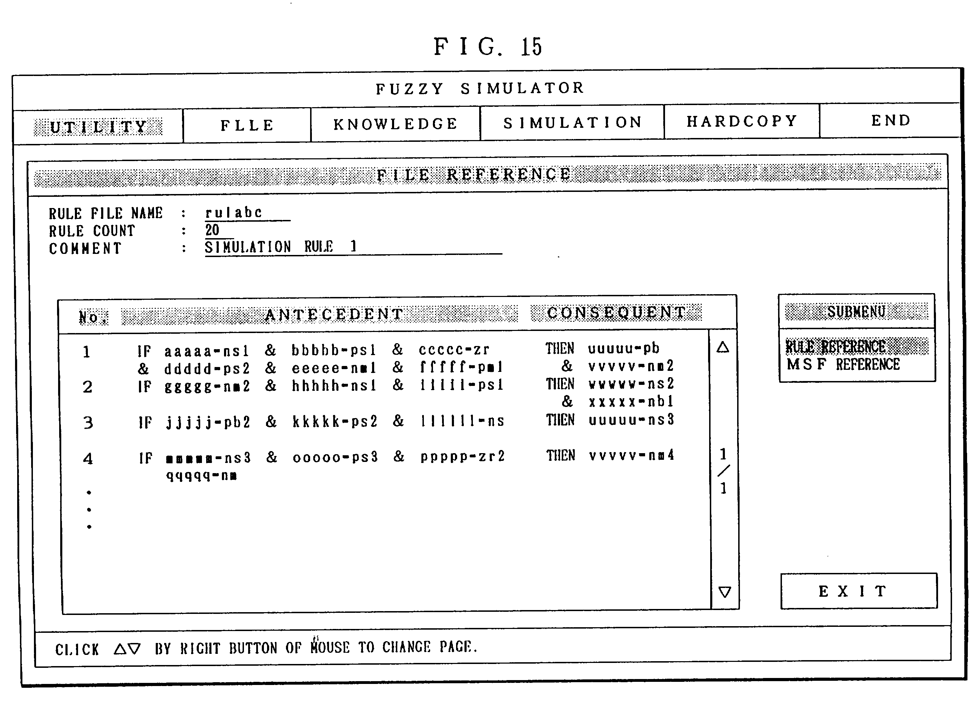

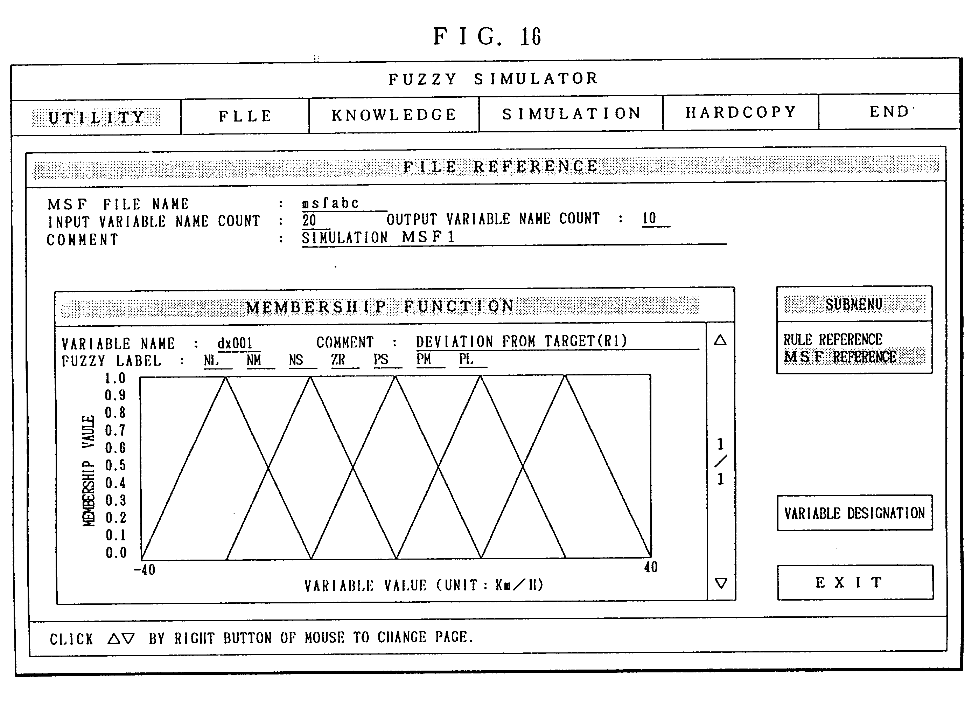

FIG. 13 is a configuration diagram showing in more detail a fuzzy control system development support apparatus in which there is particularly shown a software constitution. This apparatus may be implemented by use of, for example, a workstation. The apparatus operates on an operating system (OS), for example, UNIX. The operating system (UNIX) supervises a screen control for achieving a data editing and the like on a display screen, a graphic control for displaying a simulation result and the like on the display screen, and the man-machine interface. A knowledge setting section 50 is disposed to store the fuzzy processing rules and the membership functions in a knowledge base 51. In the knowledge setting section 50, a fuzzy processing rule (to be simply referred to as a rule herebelow) is edited on the main memory and a membership function (MFS) is defined and is edited thereon. FIG. 14 shows an editing screen utilized when a membership function is edited by use of the knowledge setting section 50. In this display screen, the operator may input data items such as input/output variable names, a fuzzy label, a comment, and lower and upper limit values of a variable name. FIG. 15 shows an editing screen employed when an inference processing rule is edited by the knowledge setting section 50. As can be seen from this diagram, in this display screen, the operator can input six conditions as the antecedent and two conclusions as the consequent. FIG. 16 shows a display screen in which a membership function inputted in the editing screen above in the utility mode is graphically displayed. In this screen, the file name of the membership function is indicated as msfabc. By using an input operation device such as a mouse, it is possible to change the page of the membership function file. The control of the input section including the mouse is achieved by the man-machine interface, whereas the graphic display operations such as the data editing and the membership function display on the display screen are supervised by the screen control and graphic control sections of the operating system.

The inference processing rules and membership functions stored in the knowledge base are translated to generate a file containing the contents of the knowledge base in an execution format in the execution format conversion or translation section 52. That is, based on the knowledge base, the contents thereof are converted, for example, by adding parameters such as those of inference methods, into data in a format executable by the fuzzy inference program. The execution file is then transmitted to the fuzzy inference section (to be simply referred to as an inference section herebelow) 53, which achieves a fuzzy inference on the received data to supply a result of the inference to the graphic control section.

A simple inference simulation is accomplished by means of the inference section 53 and the pseudo input section 54. The pseudo input section 54 supplies pseudo data to the knowledge base 51. Input data inlcude the single data and the consecutive data, whereas the input format allows data including an integer, a real number, and an exponent data item. The consecutive data may be retained as an input data file. The pseudo data is subjected to an input editing by use of the screen control section. The result of an inference accomplished by the inference section 53 is sent to the graphic control section so as to be displayed as the final fuzzy output and determinant values. Incidentally, when pseudo data items are consecutively inputted, the inference results are attained as a graphic display with the X and Y axes representing the input data and the inference results, respectively.

In order to conduct a simulation of a control system, there are utilized a plant setting section 60 for establishing a model 61 of a plant as a control object, a simulation environment setting section 62, a plant computing section 63, an output section 64 for outputting a result of the simulation, the knowledge base 51, and the inference section 53.

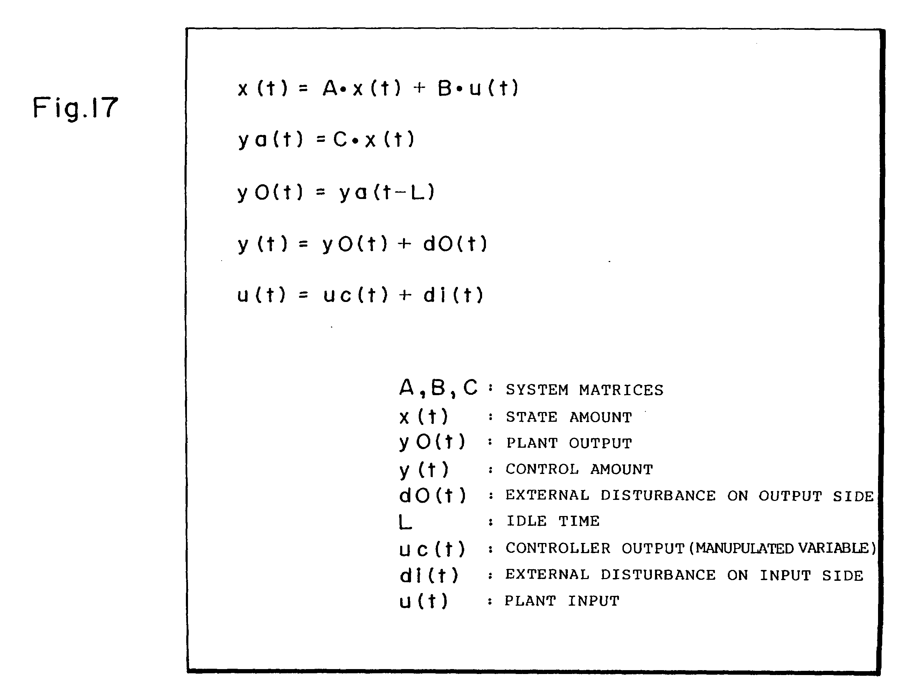

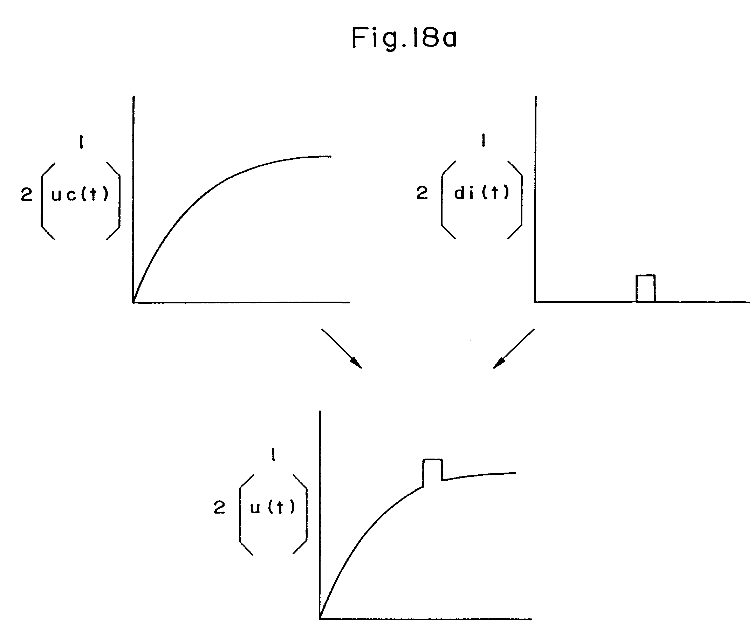

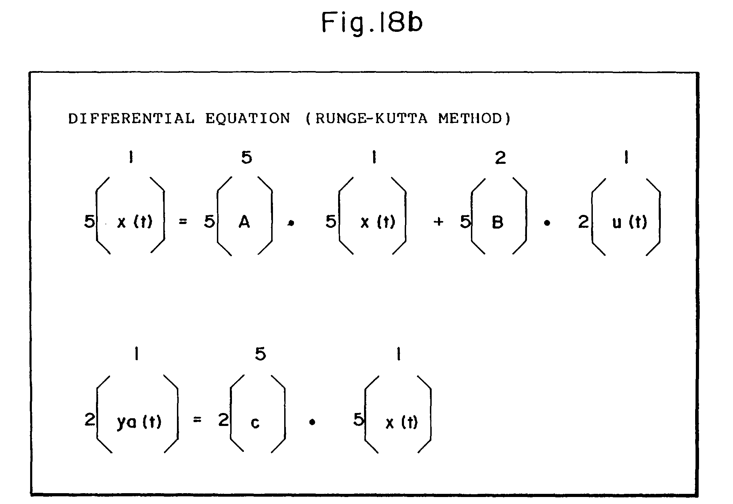

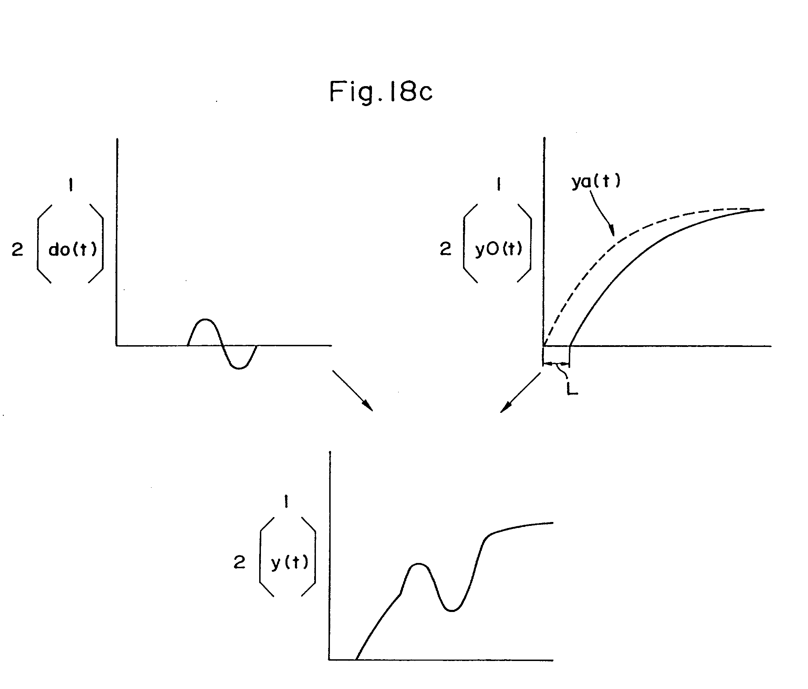

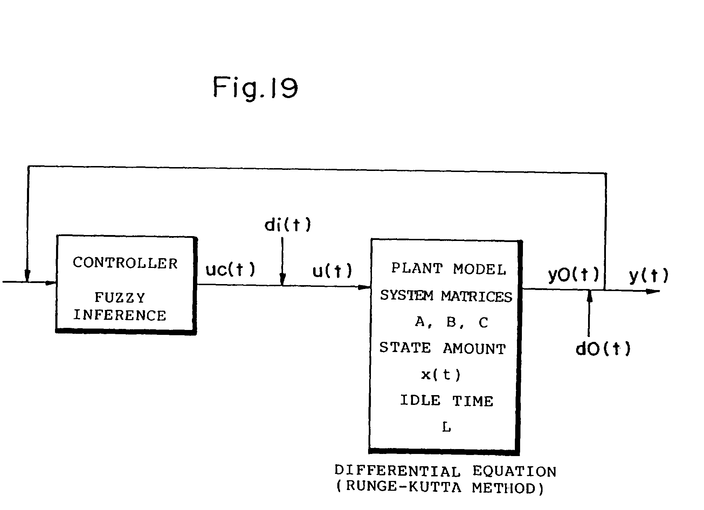

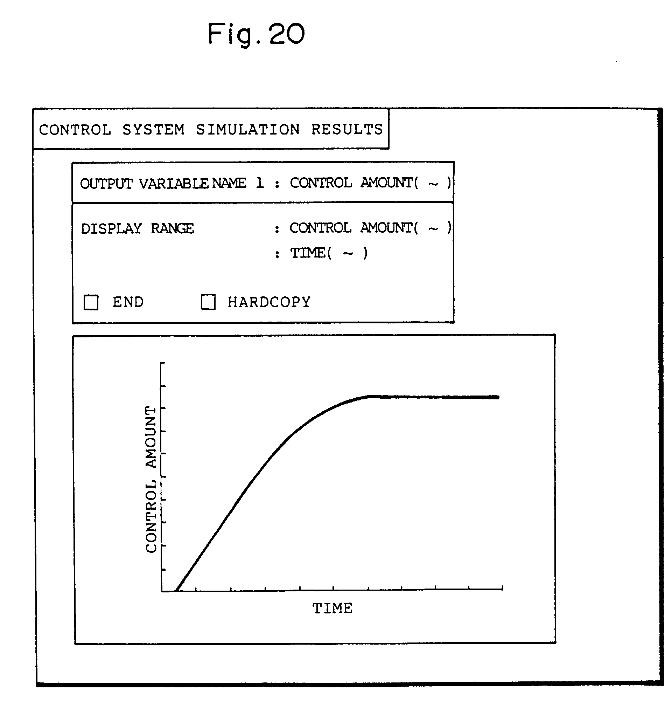

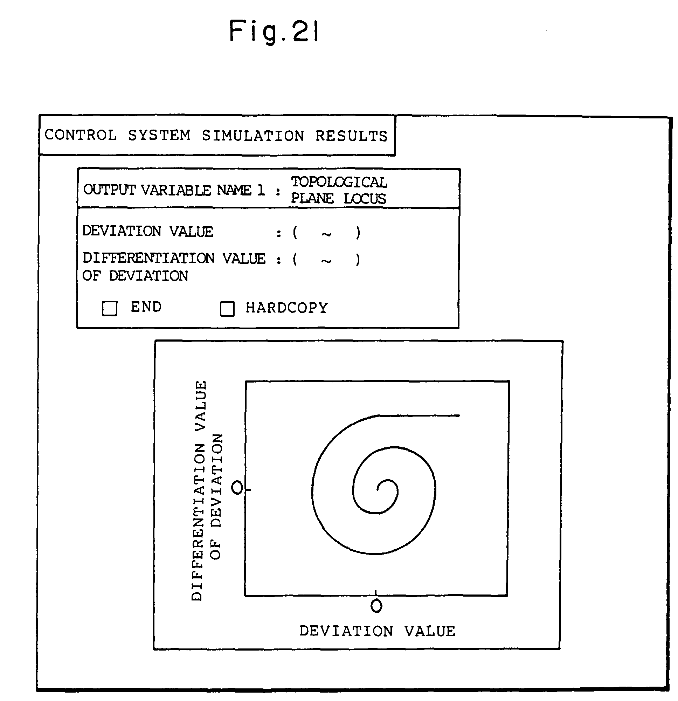

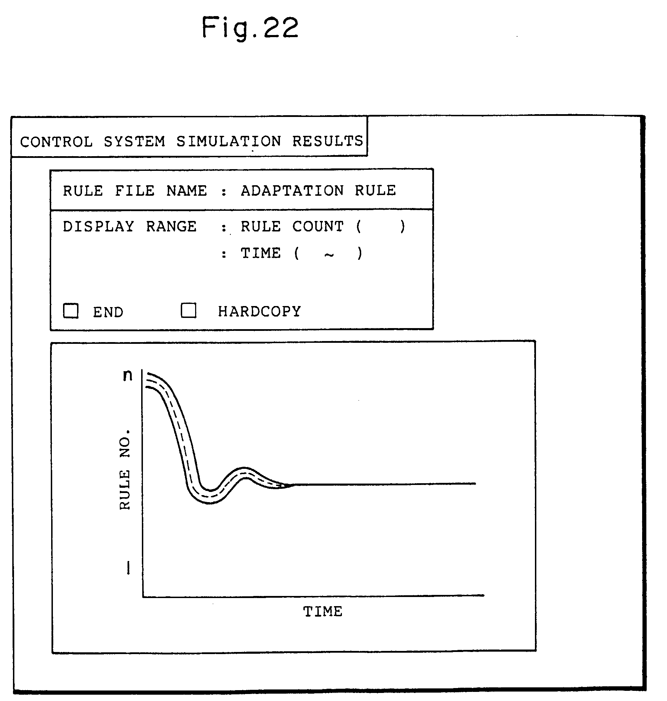

For a simulation of the control system, as shown in the configuration of FIG. 12, a fuzzy inference engine set as a controller and a plant model established by use of parameters are configured in a control system of a closed loop, thereby achieving the simulation. This provision enables the fuzzy control to be simply evaluated. In the simulation of this control system, various kinds of enviromental conditions may be specified. The simulation environment setting section 62 is disposed for this purpose. That is, by use of key inputs, there can be set the environmental condition items such as a simulation period of time, a step of time (sampling period of time), a target value format (step response, lump response) and a magnitude or gradient, presence/absence of an external disturbance, a disturbance format (step, pulse, sine wave), a disturbance application position (the input or output side of model) and an application start and end points of time, a magnitude of the external disturbance, a frequency in a case of a sine wave, each initial state amount of the system degree, gains on input and output sides of the controller (fuzzy inference engine), and an output format (the position type to output a controller output itself or the velocity type to accumulate control outputs to attain a final output). The plant model 61 can be set through key-in operations of the system degree, the input/output degrees, and the idle time. The plant model 61 may be represented in a format shown in FIG. 17. The plant model 61 expressed with these differential equations and the inference section 53 are linked with each other through a closed loop. The plant model 61 is then supplied with an inference result as a control input, whereas the solutions of the differential equations representing the plant model 61 are returned as a plant output to the inference section 53. The closed loop computation is repeatedly achieved m times (m = simulation period of time/step period of time) such that the controller output (the output from the inference section 53) and the plant output at the respective iteration are kept as simulation results in the simulation result output section 64. By the way, it is assumed that the plant model 61 is represented with differential equations according to the Runge-Kutta method and the plant computation section 63 accomplishes the computation as shown in FIGS. 18a to 18c. FIG. 19 shows the closed loop control system. FIG. 18a shows a procedure to obtain an input to the plant model (control objective model). The differential equations are solved as shown in FIG. 18b. The control amount is obtained through the procedure of FIG. 18c. The simulation results thus attained are passed to the graphic control section, so that the respective data items of the controller output (manupulated variable)and the plant output are displayed as a graph in a time domain on a cathode-ray tube (CRT) screen. FIG. 20 is a diagram showing an example of simulation results of a plant output (control amount). Simulation results also include such items as those shown in FIGS. 21 and 22. FIG. 21 shows a screen graphically showing as a topological plane locus the differential values of the deviation with respect to the deviation values, whereas FIG. 22 shows adaptive degrees of fuzzy rules. Incidentally, particularly, in this embodiment as shown in FIG. 22, since the adaptive degree can be graphically shown for each rule, it is advantageously possible to evaluate the rule in a short period of time.

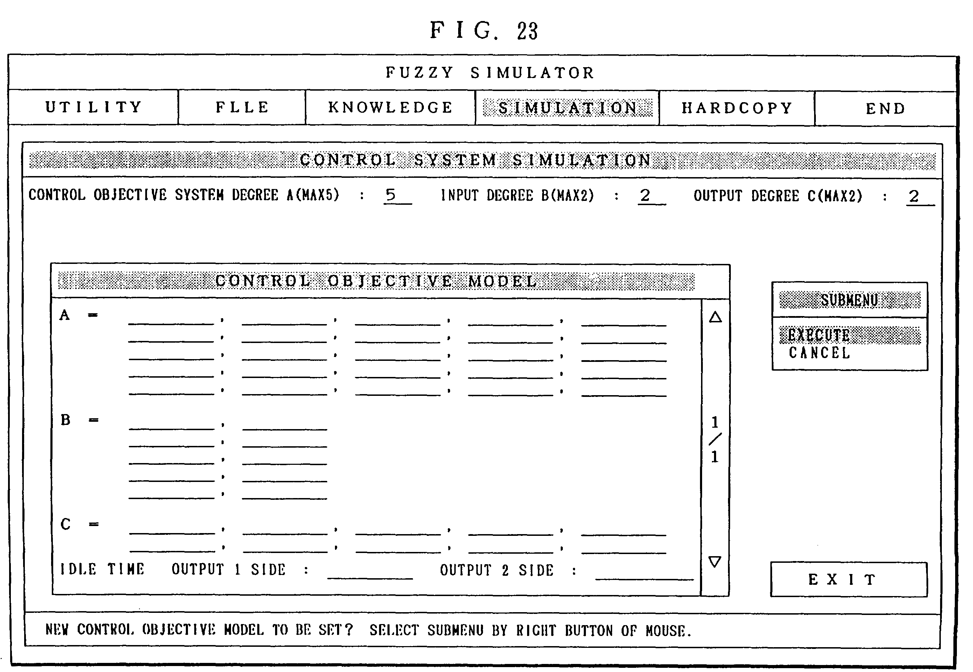

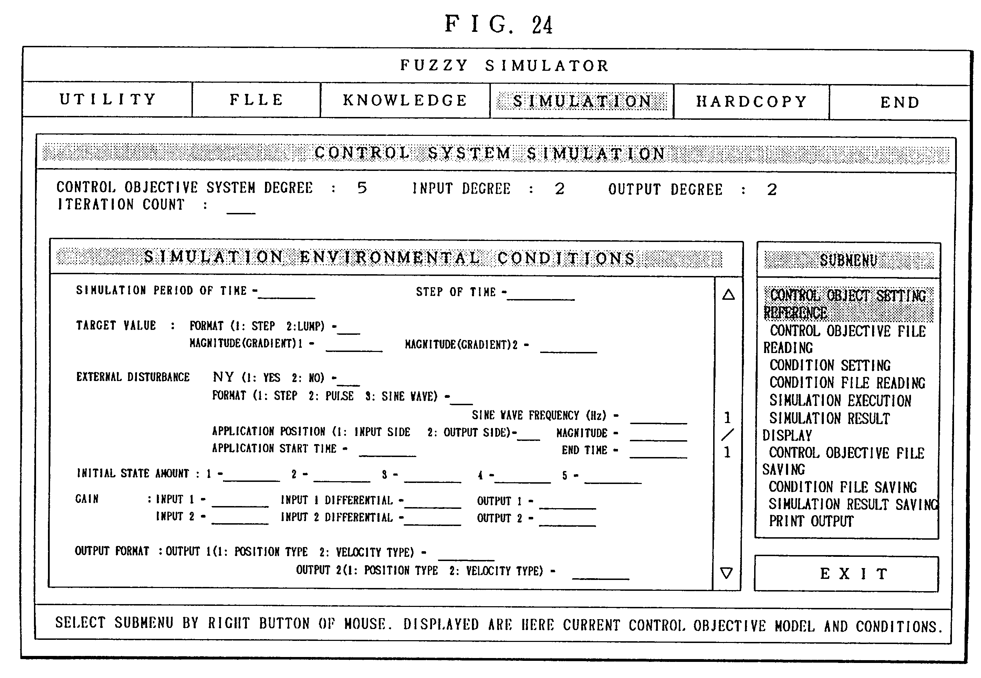

FIGS. 23 and 24 shows a screen employed to establish a plant model and a screen used to set a simulation environment condition.

Moreover, this system includes a translator 80 to translate the knowledge base 51 into the C language and an inference library 81 in which contents are beforehand prepared in the C languge. The C language translator 80 translates into source programs of the C language the rules and membership functions set in the knowledge setting section 50. The inference library 81 is to be loaded at least with the following items.

①Set data to an input variable.
②Execute an inference.
③Read a value of an output variable.
④Read a value of an input variable.
⑤Dump various data items.

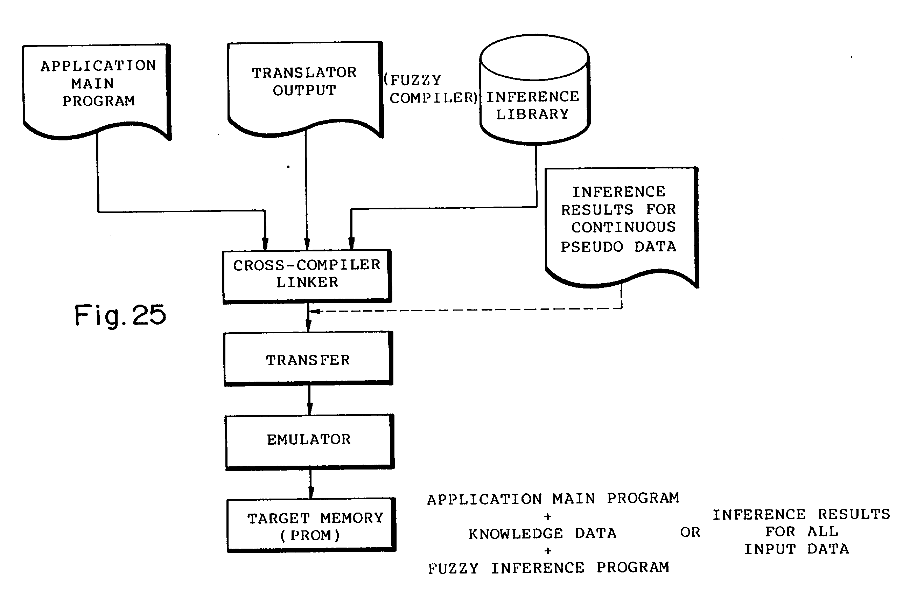

The contents of inference library 81 and the source programs of the C language thus translated and stored in the knowledge base by the C language translator 80 are used to develop application programs depending on various microprocessors. FIG. 25 shows a procedure employed when a software fuzzy program is stored in a target memory. An application program prepared in the C language, for example, a main program to control a temperature adjuster and the C language translator output and the inference library output respectively produced from the support apparatus shown as an embodiment in FIG. 13 are processed by use of a cross-compiler for a microprocessor as a target machine. The compilation results are further processed through a linker and a debugger to create an object program. The produced object program is then delivered to an emulator, which writes the object code of the program in a target memory, PROM. Through the procedure above, the fuzzy temperature adjuster control program is stored in the target memory. The target memory including the control program is installed in a controller board achieving a control of the temperature adjuster. By the way, in this system, since -inference results can be obtained for consecutive pseudo input data items, the inreference results can be directly stored through the emulator into the target memory. Also in this situation, the target memory is directly mounted, for use, on the CPU board of the actual machine.

While the particular embodiments of the invention have been shown and described, it will be obvious to those skilled in the art that various changes and modifications may be made without departing from the present invention as claimed.

## Claims

1. A fuzzy control system development support apparatus characterized in that said apparatus comprises:

a control objective model (61, 73) to be controlled provided in a simulation section (43);
a knowledge base (41, 51) connected to said simulation section storing therein fuzzy rules and membership functions previously set;
a display means (42, 50) connected to said knowledge base for enabling editing of said fuzzy rules and said membership functions stored in said knowledge base to an operator;
translation means (44, 80) connected to said knowledge base for translating said knowledge base into an arbitrary programming application language;
means (54, 70) included in said simulation section for generating and supplying successively a pseudo input to said knowledge base by said operator;
means (53, 71) also included in said simulation section for performing fuzzy inferences on said pseudo inputs supplied from said generating means (54, 70) to said knowledge base and on feedback from said control objective model in accordance with said fuzzy rules and membership functions stored in said knowledge base, and for supplying said fuzzy inference results to said control objective model; and

means (64, 74) connected to said control objective model for outputting at least one status value of said control objective model controlled by the results of said fuzzy inference performing means (53, 71).

2. The fuzzy control system development support apparatus in accordance with claim 1 characterized in that said pseudo input generating means generates and supplies a single pseudo input, and said inference performing means conducts a single inference operation.

3. The fuzzy control system development support apparatus in accordance with claim 1 characterized in that said pseudo input generating means generates and supplies consecutive pseudo inputs, and said inference performing means conducts consecutive inference operations.

4. The fuzzy control system development support apparatus in accordance with claim 3 characterized in that said output means provides a graphic display with two coordinate axes representing the pseudo input data and the consecutive inference results.

5. The fuzzy control system development support apparatus in accordance with claim 1 characterized in that the inference result obtained by said inference performing means is a determinant value.

6. The fuzzy control system development support apparatus in accordance with claim 1 characterized in that said apparatus further comprises:

input means (50) for inputting data defining a fuzzy rule and including conditions for an antecedent and a consequent of the fuzzy rule and data defining a membership function and including input and output variable names.

7. The fuzzy control system development support apparatus in accordance with claim 1 characterized in that said apparatus further comprises:

format conversion means (52) for converting the format of the fuzzy rules and membership functions stored in said knowledge base into a format executable by said inference performing means.

8. The fuzzy control system development support apparatus in accordance with claim 1 characterized in that said control objective model is represented by an equation and said inference performing means solves the equation to obtain the inference result.

9. The fuzzy control system development support apparatus in accordance with claim 1 characterized in that said apparatus further comprises:

simulation environment setting means (62) for specifying environmental conditions in which said inference performing means operates.

10. A method of supporting development of a fuzzy control system comprising the steps of:

preparing a control objective model (61,73) to be controlled in a simulation section (43);
preparing a knowledge (41,51) base for storing therein fuzzy rules and membership functions;
editing on a display means (42, 50) said fuzzy rules and said membership functions stored in said knowledge base for an operator;
successively generating and supplying a pseudo input to said knowledge base by said operator from said simulation section (43);
performing fuzzy inferences on said supplied pseudo input and on feedback from said control objective model in accordance with said fuzzy rules and membership functions stored in said knowledge base, and supplying said fuzzy inference results to said control objective model;
outputting at least one status value of said model controlled by the results of said fuzzy inference; and
translating said knowledge base into an arbitrary programming application language.

11. The method of supporting development of the fuzzy control system in accordance with claim 10 characterized in that a single pseudo input is generated and supplied, and a single inference operation is conducted.

12. The method of supporting development of the fuzzy control system in accordance with claim 10 characterized in that consecutive pseudo inputs are generated and supplied, and consecutive inference operations are conducted.

13. The method of supporting development of the fuzzy control system in accordance with claim 12 characterized in that said method further comprises the step of providing a graphic display with two coordinate axes representing the pseudo input data and the consecutive inference results.

14. The method of supporting development of the fuzzy control system in accordance with claim 10 characterized in that the inference result obtained by said fuzzy inference is a determinant value.

15. The method of supporting development of the fuzzy control system in accordance with claim 10 characterized in that said method further comprises the step of inputting data defining a fuzzy rule and including conditions for an antecedent and a consequent of the fuzzy rule and data defining a membership function and including input and output variable names.

16. The method of supporting development of the fuzzy control system in accordance with claim 10 characterized in that said method further comprises the step of converting the format of the fuzzy rules and membership functions stored in said knowledge base into a format executable in said fuzzy inference.

17. The method of supporting development of the fuzzy control system in accordance with claim 10 characterized in that said control objective model is represented by an equation and the equation is solved by performing fuzzy inferences to obtain the inference result.

18. The method of supporting development of the fuzzy control system in accordance with claim 10 characterized in that said method further comprises the step of setting environmental conditions in which the fuzzy inference is performed.

## Patentansprüche

1. Entwicklungsunterstützungsvorrichtung für ein Fuzzysteuerungssystem, dadurch gekennzeichnet, daß die Vorrichtung aufweist:

ein zu steuerndes Steuerzielmodell (61, 73), das in einem Simulationsabschnitt (43) vorgesehen ist;
eine mit dem Simulationsabschnitt verbundene Wissensbank (41, 51), welche vorher eingestellte Fuzzy-Regeln und Zugehörigkeitsfunktionen speichert;
mit der Wissensbank verbundene Anzeigemittel (42, 50) zur Ermöglichung einer Aufbereitung der in der Wissensbank gespeicherten Fuzzy-Regeln und Zugehörigkeitsfunktionen durch einen Bediener;
mit der Wissensbank verbundene Übersetzungsmittel (44, 80) zur Übersetzung der Wissensbank in eine beliebige Anwendungsprogrammiersprache;
im Sumulationsabschnitt enthaltene Mittel (54, 70) zur Erzeugung und aufeinanderfolgenden Zuführung einer Pseudoeingabe an die Wissensbank durch den Bediener;
auch in dem Simulationsabschnitt enthaltene Mittel (53, 71) zur Durchführung von Fuzzy-Schlußfolgerungen auf den Pseudoeingaben, die von den Erzeugungsmitteln (54, 70) der Wissensbank zugeführt worden sind, und auf Rückführung vom Steuerzielmodell gemäß den in der Wissensbank gespeicherten Fuzzy-Regeln und Zugehörigkeitsfunktionen und zur Zuführung der Fuzzy-Schlußfolgerungsergebnisse an das Stuerzielmodell; und
mit dem Steuerzielmodell verbundene Mittel (64, 74) zur Ausgabe wenigstens eines Statuswerts des durch die Ergebnisse der Fuzzy-Schlußfolgerungsdurchführungsmittel (53, 71) gesteuerten Steuerzielmodells.

2. Entwicklungsunterstützungsvorrichtung für ein Fuzzy-Steuersystem nach Anspruch 1, dadurch gekennzeichnet, daß die Pseudoeingabeerzeugungsmittel eine einzelne Pseudoeingabe erzeugen und liefern und daß die Schlußfolgerungsdurchführungsmittel eine einzelne Schlußfolgerungsoperation durchführen.

3. Entwicklungsunterstützungsvorrichtung für ein Fuzzy-Steuersystem nach Anspruch 1, dadurch gekennzeichnet, daß die Pseudoeingabeerzeugungsmittel aufeinanderfolgende Pseudoeingaben erzeugen und zuführen und daß die Schlußfolgerungsdurchführungsmittel aufeinanderfolgende Schlußfolgerungsoperationen durchführen.

4. Entwicklungsunterstützungsvorrichtung für ein Fuzzy-Steuersystem nach Anspruch 3, dadurch gekennzeichnet, daß die Ausgabemittel eine graphische Anzeige mit zwei Koordinatenachsen, die die Pseudoeingabedaten und die aufeinanderfolgenden Schlußfolgerungsergebnisse darstellen, liefern.

5. Entwicklungsunterstützungsvorrichtung für ein Fuzzy-Steuersystem nach Anspruch 1, dadurch gekennzeichnet, daß das von den Schlußfolgerungsdurchführungsmitteln gewonnene Ergebnis ein determinierender Wert ist.

6. Entwicklungsunterstützungsvorrichtung für ein Fuzzy-Steuersystem nach Anspruch 1, dadurch gekennzeichnet, daß die Vorrichtung ferner aufweist:

Eingabemittel (50) zur Eingabe von Daten, die eine Fuzzy-Regel definieren und Bedingungen für einen Vordersatz und einen Hintersatz der Fuzzy-Regel enthalten, und von Daten, die eine Zugehörigkeitsfunktion definieren und Eingabe- und Ausgabevariablennamen enthalten.

7. Entwicklungsunterstützungsvorrichtung für ein Fuzzy-Steuersystem nach Anspruch 1, dadurch gekennzeichnet, daß die Vorrichtung ferner aufweist:

Formatumwandlungsmittel (52) zur Umwandlung des Formats der in der Wissensbank gespeicherten Fuzzy-Regeln und Zugehörigkeitsfunktionen in ein Format, welches mit den Schlußfolgerungsdurchführungsmitteln ausführbar ist.

8. Entwicklungsunterstützungsvorrichtung für ein Fuzzy-Steuersystem nach Anspruch 1, dadurch gekennzeichnet, daß das Steuerzielmodell durch eine Gleichung dargestellt wird und die Schlußfolgerungsdurchführungsmittel die Gleichung zur Gewinnung der Schlußfolgerungsergebnisse lösen.

9. Entwicklungsunterstützungsvorrichtung für ein Fuzzy-Steuersystem nach Anspruch 1, dadurch gekennzeichnet, daß die Vorrichtung ferner aufweist:

Simulationsumgebungseinstellmittel (62) zur Spezifizierung von Umgebungsbedingungen, in welchen die Schlußfolgerungsdurchführungsmittel arbeiten.

10. Verfahren zur Unterstützung der Entwicklung eines Fuzzy-Steuersystems mit den Verfahrensschritten des

Erstellens eines in einem Simulationsabschnitt (43) zu steuernden Steuerzielmodells (61, 73),
Erstellens einer Wissensbank (41, 51) zur Speicherung von Fuzzy-Regeln und Zugehörigkeitsfunktionen,
Aufbereitens, auf Anzeigemitteln (42, 50), der in der Wissensbank gespeicherten Fuzzy-Regeln für einen Bediener,
aufeinanderfolgenden Erzeugens und Zuführens einer Pseudoeingabe an die Wissensbank durch den Bediener von dem Simulationsabschnitt (43),
Durchführens von Fuzzy-Schlußfolgerungen auf der zugeführten Pseudoeingabe und auf Rückführung von dem Steuerzielmodell gemäß den in der Wissensbank gespeicherten Fuzzy-Regeln und Zugehörigkeitsfunktionen und Lieferns der Fuzzy-Schlußfolgerungsergebnisse an das Steuerzielmodell,
Ausgebens von wenigstens einem Statuswert des durch die Ergebnisse der Fuzzy-Schlußfolgerung gesteuerten Modells, und
Übersetzens der Wissenbank in eine beliebige Anwendungsprogrammiersprache.

11. Verfahren zur Unterstützung der Entwicklung eines Fuzzy-Steuersystems nach Anspruch 10, dadurch gekennzeichnet, daß eine einzelne Pseudoeingabe erzeugt und zugeführt und eine einzelne Schlußfolgerungsoperation durchgeführt wird.

12. Verfahren zur Unterstützung der Entwicklung eines Fuzzy-Steuersystems nach Anspruch 10, dadurch gekennzeichnet, daß aufeinanderfolgende Pseudoeingaben erzeugt und zugeführt und aufeinanderfolgende Schlußfolgerungsoperationen durchgeführt werden.

13. Verfahren zur Unterstützung der Entwicklung eines Fuzzy-Steuersystems nach Anspruch 12, dadurch gekennzeichnet, daß das Verfahren ferner den Schritt des Lieferns einer graphischen Anzeige mit zwei Koordinatenachsen, die die Pseudoeingabedaten und die aufeinanderfolgenden Schlußfolgerungsergebnisse darstellen, aufweist.

14. Verfahren zur Unterstützung der Entwicklung eines Fuzzy-Steuersystems nach Anspruch 10, dadurch gekennzeichnet, daß das mit der Fuzzy-Schlußfolgerung gewonnene Schlußfolgerungsergebnis ein determinierender Wert ist.

**15.** Verfahren zur Unterstützung der Entwicklung eines Fuzzy-Steuersystems nach Anspruch 10, dadurch gekennzeichnet, daß das Verfahren ferner den Schritt des Eingebens von Daten, die eine Fuzzy-Regel definieren und Bedingungen für einen Vordersatz und einen Hintersatz der Fuzzy-Regel enthalten, und von Daten, die eine Zugehörigkeitsfunktion definieren und Eingabe- und Ausgabevariablennamen enhalten, aufweist.

**16.** Verfahren zur Unterstützung der Entwicklung eines Fuzzy-Steuersystems nach Anspruch 10, dadurch gekennzeichnet, daß das Verfahren ferner den Schritt des Umwandelns des Formats der in der Wissensbank gespeicherten Fuzzy-Regeln und Zugehörigkeitsfunktionen in ein in der Fuzzy-Schlußfolgerung ausführbares Format aufweist.

**17.** Verfahren zur Unterstützung der Entwicklung eines Fuzzy-Steuersystems nach Anspruch 10, dadurch gekennzeichnet, daß das Steuerzielmodell durch eine Gleichung dargestellt wird und die Gleichung durch Durchführen von Fuzzy-Schlußfolgerungen zur Gewinnung des Schlußfolgerungsergebnisses gelöst wird.

**18.** Verfahren zur Unterstützung der Entwicklung eines Fuzzy-Steuersystems nach Anspruch 10, dadurch gekennzeichnet, daß das Verfahren ferner den Schritt des Einstellens von Umgebungsbedingungen, in welchen die Fuzzy-Schlußfolgerung durchgeführt wird, aufweist.

**Revendications**

**1.** Appareil d'aide à la réalisation d'un système de commande à logique floue, caractérisé en ce que ledit appareil comprend :

un modèle de commande objectif (61, 73) destiné à être contrôlé, disposé dans une partie de simulation (43) ; une base de connaissance (41, 51), connectée à ladite partie de simulation, contenant dans celle-ci des règles floues et des fonctions d'appartenance déterminées précédemment ; des moyens d'affichage (42, 50), connectés à ladite base de connaissance, pour permettre l'édition vers un opérateur desdites règles floues et desdites fonctions d'appartenance stockées dans ladite base de connaissance ; des moyens de traduction (44, 80), connectés à ladite base de connaissance, pour traduire ladite base de connaissance en un langage arbitraire d'application de programmation ; des moyens (54, 70), inclus dans ladite partie de simulation, pour générer et délivrer successivement une pseudo-entrée à ladite base de connaissance par ledit opérateur ; des moyens (53, 71), également inclus dans ladite partie de simulation, pour exécuter des inférences floues sur lesdites pseudo-entrées délivrées par lesdits moyens de génération (54, 70) à ladite base de connaissance et réinjectant ledit modèle de commande objectif, conformément auxdites règles floues et fonctions d'appartenance stockées dans ladite base de connaissance et pour délivrer lesdits résultats d'inférence floue audit modèle de commande objectif ; et des moyens (64, 74), connectés audit modèle de commande objectif, pour délivrer en sortie au moins un état de valeur dudit modèle de commande objectif contrôlé par les résultats desdits moyens d'exécution d'inférence floue (53, 71).

**2.** Appareil d'aide à la réalisation d'un système de commande à logique floue selon la revendication 1, caractérisé en ce que lesdits moyens de génération de pseudo-entrée génèrent et délivrent une pseudo-entrée unique, et lesdits moyens d'exécution d'inférence dirigent une opération d'inférence unique.

**3.** Appareil d'aide à la réalisation d'un système de commande à logique floue selon la revendication 1, caractérisé en ce que lesdits moyens de génération de pseudo-entrée génèrent et délivrent des pseudo-entrées consécutives, et lesdits moyens d'exécution d'inférence dirigent des opérations d'inférence consécutives.

**4.** Appareil d'aide à la réalisation d'un système de commande à logique floue selon la revendication 3, caractérisé en ce que lesdits moyens de sortie délivrent un affichage graphique avec deux axes de coordonnées représentant les données de pseudo-entrée et les résultats d'inférence consécutifs.

**5.** Appareil d'aide à la réalisation d'un système de commande à logique floue selon la revendication 1, caractérisé en ce que le résultat d'inférence obtenu par lesdits moyens d'exécution d'inférence est une valeur de déterminant.

**6.** Appareil d'aide à la réalisation d'un système de commande à logique floue selon la revendication 1, caractérisé en ce que ledit appareil comprend en outre :

des moyens d'entrée (50), pour appliquer en entrée des données définissant une règle floue et comportant des conditions pour un antécédent et une conséquence de la règle floue, et des données définissant une fonction d'appartenance et comportant des noms de variables d'entrée et de sortie.

**7.** Appareil d'aide à la réalisation d'un système de commande à logique floue selon la revendication 1, caractérisé en ce que ledit appareil comprend en outre :

des moyens de conversion de format (52), pour convertir le format des règles floues et des fonctions d'appartenance stockées dans ladite base de connaissance en un format exécutable par lesdits moyens d'exécution d'inférence.

**8.** Appareil d'aide à la réalisation d'un système de commande à logique floue selon la revendication 1, caractérisé en ce que ledit modèle de commande objectif est représenté par une équation et lesdits moyens d'exécution d'inférence résolvent l'équation pour obtenir le résultat d'inférence.

**9.** Appareil d'aide à la réalisation d'un système de commande à logique floue selon la revendication 1, caractérisé en ce que ledit appareil comprend en outre :

des moyens de détermination d'environnement de simulation (62), pour spécifier des conditions environnementales dans lesquelles lesdits moyens d'exécution d'inférence opèrent.

**10.** Procédé d'aide à la réalisation d'un système de commande à logique floue comprenant les étapes consistant à :

confectionner un modèle de commande objectif (61, 73) destiné à être contrôlé dans une partie de simulation 43) ;
confectionner une base de connaissance (41, 51), pour contenir dans celle-ci des règles floues et des fonctions d'appartenance ;
éditer sur des moyens d'affichage (42, 50) lesdites règles floues et lesdites fonctions d'appartenance stockées dans ladite base de connaissance, pour un opérateur ;
successivement générer et délivrer une pseudo-entrée à ladite base de connaissance par ledit opérateur à partir de ladite partie de simulation (43) ;
exécuter une inférence floue sur ladite pseudo-entrée délivrée et sur la réinjection depuis ledit modèle de commande objectif, conformément auxdites règles floues et fonctions d'appartenance stockées dans ladite base de connaissance et délivrer lesdits résultats d'inférence floue audit modèle de commande objectif ;
délivrer en sortie au moins une valeur d'état dudit modèle contrôlé par les résultats de ladite inférence ; et
traduire ladite base de connaissance en un langage d'application de programmation arbitraire.

**11.** Procédé d'aide à la réalisation d'un système de commande à logique floue selon la revendication 10, caractérisé en ce qu'une pseudo-entrée unique est générée et délivrée, et une opération d'inférence unique est dirigée.

**12.** Procédé d'aide à la réalisation d'un système de commande à logique floue selon la revendication 10, caractérisé en ce que des pseudo-entrées consécutives sont générées et délivrées, et des opérations d'inférence consécutives sont dirigées.

**13.** Procédé d'aide à la réalisation d'un système de commande à logique floue selon la revendication 12, caractérisé en ce que ledit procédé comprend en outre l'étape consistant à fournir un affichage graphique avec deux axes de coordonnées représentant les données de pseudo-entrée et les résultats d'inférence consécutifs.

**14.** Procédé d'aide à la réalisation d'un système de commande à logique floue selon la revendication 10, caractérisé en ce que le résultat d'inférence obtenu par ladite inférence floue est une valeur de déterminant.

**15.** Procédé d'aide à la réalisation d'un système de commande à logique floue selon la revendication 10, caractérisé en ce que ledit procédé comprend en outre l'étape consistant à appliquer en entrée des données définissant une règle floue et comportant des conditions pour un antécédent et une conséquence de la règle floue, et des données définissant une fonction d'appartenance et comportant des noms de variables d'entrée et de sortie.

**16.** Procédé d'aide à la réalisation d'un système de commande à logique floue selon la revendication 10, caractérisé en ce que ledit procédé comprend en outre l'étape consistant à convertir le format des règles floues et des fonctions d'appartenance stockées dans ladite base de connaissance en un format exécutable par ladite inférence floue.

17. Procédé d'aide à la réalisation d'un système de commande à logique floue selon la revendication 10, caractérisé en ce que ledit modèle de commande objectif est représenté par une équation et l'équation est résolue en exécutant des inférences floues pour obtenir le résultat d'inférence.

18. Procédé d'aide à la réalisation d'un système de commande à logique floue selon la revendication 10, caractérisé en ce que ledit procédé comprend en outre l'étape consistant à fixer des conditions environnementales dans lesquelles l'inférence floue est exécutée.

# Fig.1

EP 0 715 253 B1

## Fig. 2

```
                    ┌─ I2         6(7)
          ┌─────────┼───────────┐
          │  ┌──────┴────────┐  │
          │  │  MEMBERSHIP   │  │
X ────────┼─▶│FUNCTION VALUE │  │──▶  MEMBERSHIP  FUNCTION  VALUE
          │  │  COMPUTING    │  │
          │  │   SECTION     │  │
          │  └───────────────┘  │
          │         ▲           │
          │       X(a)    ┌─ I I│
          │  ┌──────┴──────┐    │
          │  │  MEMBERSHIP  │   │
          │  │  FUNCTION    │   │
          │  │  SETTING     │   │
          │  │  SECTION     │   │
          │  └──────────────┘   │
          └─────────▲───────────┘
                    │
a ──────────────────┘
(al OR a2)
```

## Fig. 3

```
                  ▲              I I
          ┌───────┼──────────┐
          │       │   ┌─ I4  │
          │  ┌────┴─────────┐ │
          │  │  MEMBERSHIP  │ │
          │  │  FUNCTION    │ │
          │  │  GENERATING  │ │
          │  │  SECTION     │ │
          │  └──────────────┘ │
          │        ▲   ┌─ I3  │
          │  ┌─────┴────────┐ │
          │  │   FUZZY      │ │
          │  │  INFERENCE   │ │
          │  │  SECTION     │ │
          │  └──────────────┘ │
          └────────▲──────────┘
                   │
a ─────────────────┘
```

# Fig.4

APPROPRIATE
TEMPERATURE

LUBEWARM                              HOT

38      40      42      44      46 TEMPERATURE(°C)

# Fig.5

APPROPRIATE
TEMPERATURE

LUBEWARM                              HOT

38      40      42      44      46 TEMPERATURE(°C)

# Fig.6a

COLD            WARM            HOT

O      10      20      30      40 OUTDOOR TEMPERATURE(°C)

# Fig.6b

SLIGHTLY        ORDINARY        SLIGHTLY
WARM            TEMPERATURE     HOT

-4      -2      0      2      4 TEMPERATURE
                               DIFFERENCE(°C)

Fig.7

EXCEPTION SIGNAL

RULE INPUT

MEMBERSHIP
FUNCTION INPUT

COEFFICIENT INPUT

23 RULE STORAGE

24 MEMBERSHIP
FUNCTION
STORAGE

25 COEFFICIENT
STORAGE

21

26 ABNORMALITY
DISPLAY SECTION

22 FUZZY INFERENCE
OPERATION
SECTION

DETERMINANT
VALUE OUTPUT

27 INFERENCE
RESULT
DISPLAY SECTION

EP 0 715 253 B1

21

EP 0 715 253 B1

## Fig.8

ANTECEDENT PROCESSING SECTION (31) → CONSEQUENT PROCESSING SECTION (32) [28] → 1ST CORRECTING SECTION (29) → 2ND CORRECTING SECTION (30) → TO DEFUZZIFIER

## Fig.9

| RULE NO. | ABSOLUTE WEIGHT COEFFICIENT | RELATED RULE NO. | RELATIVE WEIGHT COEFFICIENT | RELATED RULE NO. | RELATIVE WEIGHT COEFFICIENT | | RELATED RULE NO. | RELATIVE WEIGHT COEFFICIENT |
|---|---|---|---|---|---|---|---|---|
| 1 | 1.0 | 3 | 0 | 4 | 0 | | | |
| 2 | 1.0 | 3 | 0.5 | − | | | | |
| 3 | 1.0 | − | | | | | | |
| 4 | 0.5 | − | | | | | | |
| ⋮ | | | | | | | | |
| n | | | | | | | | |

# Fig.10

```
                    ┌──────────────────┐
                    │      START       │
                    └──────────────────┘
                             │
                    ┌──────────────────┐
                    │      INPUT        │──── ST1
                    └──────────────────┘
                             │
                    ┌──────────────────┐
         ┌─────────▶│    EXECUTION     │──── ST2
         │          │ RULE EXTRACTION  │
         │          └──────────────────┘
         │                   │
         │          ┌──────────────────┐
         │          │     ADAPTIVE     │──── ST3
         │          │ DEGREE COMPUTATION│
         │          └──────────────────┘
         │                   │
         │          ┌──────────────────┐
         │          │    CONSEQUENT    │──── ST4
         │          │    CORRECTION    │
         │          └──────────────────┘
         │                   │
         │          ┌──────────────────┐
         │          │   RELATED RULE   │──── ST5
         │          │    PROCESSING    │
         │          └──────────────────┘
         │                   │
         │          ┌──────────────────┐
         │          │     OUTPUT       │──── ST6
         │          │  COMPOSITION     │
         │          └──────────────────┘
         │                   │
         │                  ╱ ╲          ST7
         │                 ╱   ╲
         │                ╱ OTHER╲
         │  YES          ╱EXECUTION╲
         └──────────────▕ RULE FOUND? ▏
                         ╲         ╱
                          ╲       ╱
                           ╲     ╱
                            ╲   ╱
                             ╲ ╱  NO
                              │
                    ┌──────────────────┐
                    │   DETERMINANT    │──── ST8
                    │ VALUE COMPUTATION│
                    └──────────────────┘
                             │
                    ┌──────────────────┐
                    │       END        │
                    └──────────────────┘
```

Fig.11

START

ST501

WEIGHT
COEFFICIENT
FOUND FOR
RULE?

NO

YES

ST502

MULTIPLY WEIGHT
COEFFICIENT
BY RULE OUTPUT

ST503  SEARCH FOR
RELATED RULE

ST504

NO

RELATED RULE
FOUND ?

END

YES

ST505

NO

RELATED RULE
ALREADY EXECUTED
?

YES

ST506

ST509

NO

WEIGHT
COEFFICIENT
IS ZERO?

MULTIPLY WEIGHT
COEFFICIENT BY
RELATED RULE

ST508

YES

SET WEIGHT
COEFFICIENT TO
RELATED RULE

SET RELATED
RULE TO
EXECUTED STATE

ST507

Fig.12

Fig.13

# FIG. 14

## FUZZY SIMULATOR

| UTILITY | FLLE | KNOWLEDGE | SIMULATION | HARDCOPY | END |
|---|---|---|---|---|---|

### FILE REFERENCE

MSF FILE NAME : msfabc
INPUT VORIABLE NAME COUNT : 20    OUTPUT VARIABLE NAME COUNT : 10
COMMENT : SIMULATION MSF1

| VARIABLE NAME | I/O | UNIT | LOWER LIMIT VALUE — UPPER LIMIT VALUE | | COMMENT/FUZZY LABEL |
|---|---|---|---|---|---|
| ■ dx001 | i | Km/H | −40 | 40 | DEVIATION FROM TARGET(R1)<br>NL NM NS ZR PS PM PL |
| ☐ ddx01 | i | Km/H | −5 | 5 | DIFFERENTIAL OF dx001<br>NL NM NS ZR PS PM PL |
| ☐ out01 | o | V | −12 | 12 | MANIPULATED VARIABLE 1<br>NL NM NS ZR PS PM PL |

△

1
/
1

▽

### SUBMENU

RULE REFERENCE
MSF REFERENCE

EXIT

CLICK ☐ BY RIGHT BATTON OF MOUSE TO SELERT VARIABLE NAME.

EP 0 715 253 B1

# F I G. 15

EP 0 715 253 B1

# F I G. 16

FUZZY SIMULATOR

| UTILITY | FLLE | KNOWLEDGE | SIMULATION | HARDCOPY | END |

## FILE REFERENCE

MSF FILE NAME : msfabc
INPUT VARIABLE NAME COUNT : 20    OUTPUT VARIABLE NAME COUNT : 10
COMMENT : SIMULATION MSF1

### MEMBERSHIP FUNCTION

VARIABLE NAME : dx001    COMMENT : DEVIATION FROM TARGET(R1)
FUZZY LABEL : NL  NM  NS  ZR  PS  PM  PL

MEMBERSHIP VAULE (y-axis: 1.0 ... 0.0)
VARIABLE VALUE (UNIT : Km/H)
-40 ... 40

△
1/1
▽

SUBMENU

RULE REFERENCE
MSF REFERENCE

VARIABLE DESIGNATION

EXIT

CLICK △▽ BY RIGHT BUTTON OF MOUSE TO CHANGE PAGE.

EP 0 715 253 B1

Fig.17

$$x(t) = A \cdot x(t) + B \cdot u(t)$$

$$ya(t) = C \cdot x(t)$$

$$yO(t) = ya(t-L)$$

$$y(t) = yO(t) + dO(t)$$

$$u(t) = uc(t) + di(t)$$

$A, B, C$ : SYSTEM MATRICES

$x(t)$   : STATE AMOUNT

$yO(t)$ : PLANT OUTPUT

$y(t)$   : CONTROL AMOUNT

$dO(t)$ : EXTERNAL DISTURBANCE ON OUTPUT SIDE

$L$      : IDLE TIME

$uc(t)$ : CONTROLLER OUTPUT (MANUPULATED VARIABLE)

$di(t)$ : EXTERNAL DISTURBANCE ON INPUT SIDE

$u(t)$   : PLANT INPUT

Fig.18a

Fig.18b

DIFFERENTIAL EQUATION (RUNGE-KUTTA METHOD)

$$5\begin{pmatrix}1\\ x(t)\end{pmatrix} = 5\begin{pmatrix}5\\ A\end{pmatrix} \bullet 5\begin{pmatrix}1\\ x(t)\end{pmatrix} + 5\begin{pmatrix}2\\ B\end{pmatrix} \bullet 2\begin{pmatrix}1\\ u(t)\end{pmatrix}$$

$$2\begin{pmatrix}1\\ ya(t)\end{pmatrix} = 2\begin{pmatrix}5\\ c\end{pmatrix} \bullet 5\begin{pmatrix}1\\ x(t)\end{pmatrix}$$

EP 0 715 253 B1

# Fig.18c

EP 0 715 253 B1

# Fig.19

EP 0 715 253 B1

# Fig. 20

CONTROL SYSTEM SIMULATION RESULTS

OUTPUT VARIABLE NAME 1 : CONTROL AMOUNT( ~ )

DISPLAY RANGE   : CONTROL AMOUNT( ~ )

        : TIME( ~ )

☐ END   ☐ HARDCOPY

CONTROL AMOUNT

TIME

# Fig.2l

CONTROL SYSTEM SIMULATION RESULTS

OUTPUT VARIABLE NAME 1 : TOPOLOGICAL PLANE LOCUS

DEVIATION VALUE        : ( ～ )

DIFFERENTIATION VALUE : ( ～ )
OF DEVIATION

☐ END        ☐ HARDCOPY

DIFFERENTIATION VALUE OF DEVIATION

DEVIATION VALUE

# Fig.22

CONTROL SYSTEM SIMULATION RESULTS

RULE FILE NAME : ADAPTATION RULE

DISPLAY RANGE : RULE COUNT (　　　)

　　　　　　　　 : TIME (　～　)

☐ END　　　☐ HARDCOPY

# F I G. 23

FUZZY SIMULATOR

| UTILITY | FLLE | KNOWLEDGE | SIMULATION | HARDCOPY | END |

**CONTROL SYSTEM SIMULATION**

CONTROL OBJECTIVE SYSTEM DEGREE A(MAX5)  :  5      INPUT DEGREE B(MAX2)  :  2      OUTPUT DEGREE C(MAX2)  :  2

**CONTROL OBJECTIVE MODEL**

A =  _____ , _____ , _____ , _____ , _____

B =  _____ , _____

C =  _____ , _____ , _____ , _____ , _____

IDLE TIME    OUTPUT 1 SIDE  :  _____      OUTPUT 2 SIDE  :  _____

1/1

SUBMENU

EXECUTE
CANCEL

EXIT

NEW CONTROL OBJECTIVE MODEL TO BE SET?  SELECT SUBMENU BY RIGHT BUTTON OF MOUSE.

# FIG. 24

## FUZZY SIMULATOR

| UTILITY | FLLE | KNOWLEDGE | SIMULATION | HARDCOPY | END |
|---------|------|-----------|------------|----------|-----|

### CONTROL SYSTEM SIMULATION

CONTROL OBJECTIVE SYSTEM DEGREE : 5    INPUT DEGREE : 2    OUTPUT DEGREE : 2
ITERATION COUNT : ___

### SIMULATION ENVIRONMENTAL CONDITIONS

SIMULATION PERIOD OF TIME - _____          STEP OF TIME - _____

TARGET VALUE : FORMAT (1: STEP 2:LUMP) - ___
               MAGNITUDE(GRADIENT)1 - _____    MAGNITUDE(GRADIENT)2 - _____

EXTERNAL DISTURBANCE    NY (1: YES 2: NO) - ___
                        FORMAT (1: STEP 2: PULSE 3: SINE WAVE) - ___
                                                    SINE WAVE FREQUENCY (Hz) - _____
                        APPLICATION POSITION (1: INPUT SIDE 2: OUTPUT SIDE)- ___  MAGNITUDE - _____
                        APPLICATION START TIME - _____          END TIME - _____

INITIAL STATE AMOUNT : 1 - _____    2 - _____    3 - _____    4 - _____    5 - _____

GAIN    : INPUT 1 - _____    INPUT 1 DIFFERENTIAL - _____    OUTPUT 1 - _____
          INPUT 2 - _____    INPUT 2 DIFFERENTIAL - _____    OUTPUT 2 - _____

OUTPUT FORMAT : OUTPUT 1(1: POSITION TYPE 2: VELOCITY TYPE) - _____
                OUTPUT 2(1: POSITION TYPE 2: VELOCITY TYPE) - _____

△
1
/
1
▽

#### SUBMENU

CONTROL OBJECT SETTING
REFERENCE
CONTROL OBJECTIVE FILE
READING
CONDITION SETTING
CONDITION FILE READING
SIMULATION EXECUTION
SIMULATION RESULT
DISPLAY
CONTROL OBJECTIVE FILE
SAVING
CONDITION FILE SAVING
SIMULATION RESULT SAVING
PRINT OUTPUT

EXIT

SELECT SUBMENU BY RIGHT BUTTON OF MOUSE. DISPLAYED ARE HERE CURRENT CONTROL OBJECTIVE MODEL AND CONDITIONS.

EP 0 715 253 B1

Fig. 25

APPLICATION
MAIN
PROGRAM

TRANSLATOR
OUTPUT

(FUZZY
COMPILER)

INFERENCE
LIBRARY

INFERENCE
RESULTS FOR
CONTINUOUS
PSEUDO DATA

CROSS-COMPILER
LINKER

TRANSFER

EMULATOR

TARGET MEMORY
( PROM )

APPLICATION MAIN PROGRAM
+
KNOWLEDGE DATA          OR
+
FUZZY INFERENCE PROGRAM

INFERENCE RESULTS
FOR ALL
INPUT DATA

## Fig.26a

LUBEWARM · APPROPRIATE TEMPERATURE · HOT

ENVIRONMENTAL TEMPERATURE 20°C

38 · 40 · 42 · 44 · 46 TEMPERATURE(°C)

## Fig.26b

LUBEWARM · APPROPRIATE TEMPERATURE · HOT

ENVIRONMENTAL TEMPERATURE 30°C

38 · 40 · 42 · 44 · 46 TEMPERATURE(°C)

## Fig.26c

LUBEWARM · APPROPRIATE TEMPERATURE · HOT

ENVIRONMENTAL TEMPERATURE 10°C

38 · 40 · 42 · 44 · 46 TEMPERATURE(°C)

## Fig.27

LUBEWARM · APPROPRIATE TEMPERATURE · HOT

38 · 40 · 42 · 44 · 46 TEMPERATURE(°C)

## Fig.28

EXCEPTION SIGNAL

SIGNAL FROM SENSOR ETC.

91 — FUZZY INFERENCE APPARATUS

92 — FINAL DECISION SECTION

ABNORMAL OUTPUT

FINAL OUTPUT

## Fig.29

EXCEPTION SIGNAL

SIGNAL FROM SENSOR ETC.

FUZZY INFERENCE APPARATUS — 93

ABNORMAL OUTPUT

FINAL OUTPUT

EP 0 715 253 B1